# EUROPEAN PATENT SPECIFICATION

(11) **EP 3 497 510 B1**
(45) Date of publication and mention of the grant of the patent: **15.01.2025**
(21) Application number: 17840391.1
(22) Date of filing: 11.08.2017
(51) Int. Cl.: G02F 1/01, G02B 27/28, G02B 30/25, G02B 5/30

(54) **DIGITAL LIGHT PATH LENGTH MODULATION**
DIGITALE LICHTPFADLÄNGENMODULATION
MODULATION NUMÉRIQUE DE LONGUEUR DE TRAJET DE LUMIÈRE

(30) Priority: 12.08.2016 US 201615236101; 21.11.2016 US 201615358040
(43) Date of publication of application: 19.06.2019
(73) Proprietor: Avegant Corp., Belmont, CA 94002 (US)
(72) Inventor: EASH, Aron, Matthew, San Francisco, CA 94131 (US); EVANS, Allan, Thomas, San Francisco, CA 94103 (US); GROSS, Andrew, John, Redwood City, CA 94061 (US); DEWALD, Scott, D., Dallas, TX 75248 (US); WELCH, Warren, Cornelius, Foster City, CA 94404 (US)
(74) Representative: Auger, Hannah Maria
(86) International application number: PCT/US2017/046648
(87) International publication number: WO 2018/031965

(56) References cited:
- WO-A1-2012/104839
- WO-A1-2015/190157
- US-A- 4 670 744
- US-A- 6 134 031
- US-A1- 2004 156 134
- US-A1- 2004 263 806
- US-A1- 2007 139 760
- US-A1- 2007 139 760
- US-A1- 2009 052 838
- US-A1- 2009 237 785
- US-A1- 2012 268 718
- US-A1- 2014 340 588
- US-A1- 2016 077 338
- US-A1- 2016 131 920

## Description

### FIELD

The present invention relates to optics, and more particularly to extending light paths.

### BACKGROUND

Providing multiple focal planes, or discrete steps of focus adjustment, is useful for a number of applications. It can be part of creating a more realistic three dimensional display, as well as the ability to capture three dimensional data. In the prior art, multiple focus capture utilized mechanical movement such as gears or liquid lenses. Such mechanisms are expensive, slow, and relatively fragile. Another prior art method of capturing multiple focal lengths uses multiple mirrors and lenses. This is like having multiple cameras; it is bulky and expensive. Because of the bulk and expense, it also limits the number of focal lengths that can be simultaneously captured. A large beam splitter has also been used in the prior art to create two light path lengths. However, this is also a bulky solution.

Such prior art solutions are some combination of large, expensive, and slow. Liquid lenses are expensive and slow, and large beam splitters are large. This makes them difficult to use, and not useful for size or cost constrained systems, particularly portable or worn devices.

US 6134031 A discloses an optical space switch accommodating a plurality of input light paths and output light paths. The optical space switch comprises a plurality of polarization control optical switches, each consisting essentially of: polarization control means having elements, one for each input light path, for rotating through 90° the polarizing direction of light information incident from each input light path or otherwise retaining the polarizing direction thereof for output; and a light path routing element for routing the light path for the light information output from the polarization control means in accordance with the polarizing direction of the light information. These polarization control optical switches are arranged in a matrix pattern or coupled in cascade to implement a polarization control optical space switch. US 2007/139760 A1 discloses an optical path length adjuster (53) that enables electro-optical control of a physical path length between two optical elements, suitable for use in the adjustment of an optical path length within three dimensional display devices that generate a virtual image within a defined imaging volume. The adjuster varies an optical path length between an input optical path and an output optical path and includes: a plurality of first optical (61) elements and second optical elements arranged in alternating sequence along an optical path, each first optical element (62) for determining a polarisation state of a light beam passing through that element and each second optical element for selectively transmitting or reflecting a light beam incident on that element depending on the selected polarisation state of the incident light beam, wherein the optical path length traversed by an input beam on the optical path can be varied by is selecting a particular second optical element at which reflection of the input beam is to occur, the reflected input beam emerging along the output optical path. US 2009/052838 A1 discloses an optical system that can be electronically controlled using switchable wave plates in conjunction with polarized light. US 2014/340588 A1 discloses an illumination device including a solid-state light source device, a pickup lens unit on which light from the solid-state light source device is incident, and a polarization conversion element. A lens constituting the light exit surface of the pickup lens unit is an aspherical lens having a light exit surface shaped like a rotationally symmetric shape centered on a light axis when viewed from a direction of the light axis, and having a cross-section of an aspherical shape when cut with a plane parallel to the light axis.

### BRIEF DESCRIPTION OF THE FIGURES

The present invention is illustrated by way of example, and not by way of limitation, in the figures of the accompanying drawings and in which like reference numerals refer to similar elements and in which:
Figure 1A is a block diagram of one embodiment of a digital light path length modulator.
Figure 1B is a block diagram of one embodiment of a digital light path length modulator.
Figure 2A is a block diagram of one embodiment of a system in which the digital light path length modulator may be used.
Figure 2B is a block diagram of another embodiment of a system in which the digital light path length modulator may be used.
Figures 3A and 3B are diagrams of one embodiment of a digital light path length modulator in a near eye display (NED) system.
Figures 4A and 4B are diagrams of one embodiment of a digital light path length modulator in a camera system.
Figure 5A illustrates one embodiment of a cross-sectional view of an optical path length extender (OPLE).
Figure 5B illustrates another embodiment of an OPLE.
Figure 6A illustrates one embodiment of a self-aligned OPLE used to control spatial shift.
Figure 6B illustrates another embodiment of a self-aligned OPLE.
Figure 6C illustrates another embodiment of a self-aligned OPLE.
Figure 6D illustrates one embodiment of an OPLE including a plurality of plates.
Figure 7A illustrates one embodiment of the effect of using an OPLE with non-reflected light.
Figure 7B illustrates one embodiment of the effect of using the OPLE of Figure 7A, with reflected light.
Figure 7C illustrates one embodiment of the effect of using a self-aligned OPLE, with reflected light.
Figure 7D illustrates an example of light path extensions and the effect on a display.
Figure 7E illustrates an example of light path extensions and the effect on image capture.
Figures 8A and 8B illustrate one embodiment of a digital light path length modulator and an OPLE, showing different light path lengths.
Figures 8C and 8D illustrate one embodiment of a digital light path length modulator and an OPLE, showing various light path lengths.
Figures 9A and 9B illustrate one embodiment of a digital light path length modulator and an OPLE, showing various light path lengths.
Figure 10 illustrates one embodiment of a modulation stack including three digital light path length modulators.
Figure 11 illustrates one embodiment of manufacturing a set of plates to be used as OPLEs.
Figure 12 illustrates a perspective view of one embodiment of an OPLE.
Figure 13A is a block diagram of one embodiment of a digital light path length modulator.
Figure 13B is a block diagram of one embodiment of a digital light path length modulator.
Figure 14A is a block diagram of one embodiment of a system in which the digital light path length modulator may be used.
Figure 14B is a block diagram of another embodiment of a system in which the digital light path length modulator may be used.
Figure 14C is a diagram of one embodiment of a first type of OPLE.
Figure 14D is a diagram of one embodiment of a second type of OPLE not according to the claimed invention.
Figures 15A-15D illustrate one embodiment of the light paths in a cross-sectional view of one embodiment of an optical path length extender (OPLE) not according to the claimed invention.
Figure 16A illustrates another embodiment of an (OPLE) not according to the claimed invention.
Figure 16B illustrates a perspective view of one embodiment of the elements of an OPLE not according to the claimed invention.
Figure 17 is a flowchart of light path extension through one embodiment of an OPLE not according to the claimed invention.
Figure 18 is one embodiment of a modulation stack including a plurality of OPLEs.
Figure 19 is a flowchart of one embodiment of manufacturing an OPLE.
Figure 20A is diagram of one embodiment of an orthogonal optical light path length extender (OPLE) not according to the claimed invention.
Figure 20B is a diagram of an alternative embodiment of the orthogonal OPLE not according to the claimed invention.
Figures 21A-21C are diagrams illustrating light paths through the orthogonal OPLE.
Figure 22A is a diagram of another embodiment of an orthogonal OPLE, using a single angled polarization sensitive reflective element.
Figure 22B is a diagram of a different configuration of an orthogonal OPLE with a single angled polarization sensitive reflective element.
Figure 22C is a diagram of another embodiment of an orthogonal OPLE, with two angled polarization sensitive reflective elements.
Figure 22D is a diagram of one embodiment of an orthogonal OPLE with two path length extenders.
Figure 22E is a diagram of one embodiment of an orthogonal OPLE using a curved mirror.
Figure 23A is a diagram of one embodiment of the assembly of one embodiment of an orthogonal OPLE.
Figure 23B is a diagram of one embodiment of the assembly of one embodiment of an orthogonal OPLE.
Figure 24 is a diagram of one embodiment of a modulation stack including the orthogonal OPLE.

### DETAILED DESCRIPTION

A digital light path length modulator is described. The digital light path length modulator includes an optical path length extender (OPLE) and a polarization modulator, and can be used to adjust the path length of light. In one embodiment, light with state 1 polarization travels through a longer path in the OPLE than light with state 2 polarization. This can be used to create two focal planes. An OPLE is made up of one or more plates with a plurality of polarization sensitive reflective elements. A plurality of digital light path length modulators create a modulation stack.

In one embodiment, using a modulation stack the number of focal planes can be increased. This provides the capacity to build a system that can meet the physiological requirements of human vision, by creating display in which the 3D indicia of overlap, focus, and vergence match. This produces a better quality 3D display and can prevent the headaches associated with 3D displays.

This mechanism in one embodiment can also be used for image capture, and various other uses in which light waves or other waves in a similar spectrum are either projected or captured, including but not limited to cameras, binoculars, 3D printing, lithography, medical imaging, etc. Creating a simple, easy to manufacture digital light path length modulator is like the step from vacuum tubes to transistors, it enables more complex, cheaper, and much more dense digitally controlled elements, which can become building blocks for a wide range of uses.

The following detailed description of embodiments of the invention makes reference to the accompanying drawings in which like references indicate similar elements, showing by way of illustration specific embodiments of practicing the invention. Description of these embodiments is in sufficient detail to enable those skilled in the art to practice the invention. One skilled in the art understands that other embodiments may be utilized and that logical, mechanical, electrical, functional and other changes may be made without departing from the scope of the present invention. The following detailed description is, therefore, not to be taken in a limiting sense, and the scope of the present invention is defined only by the appended claims.

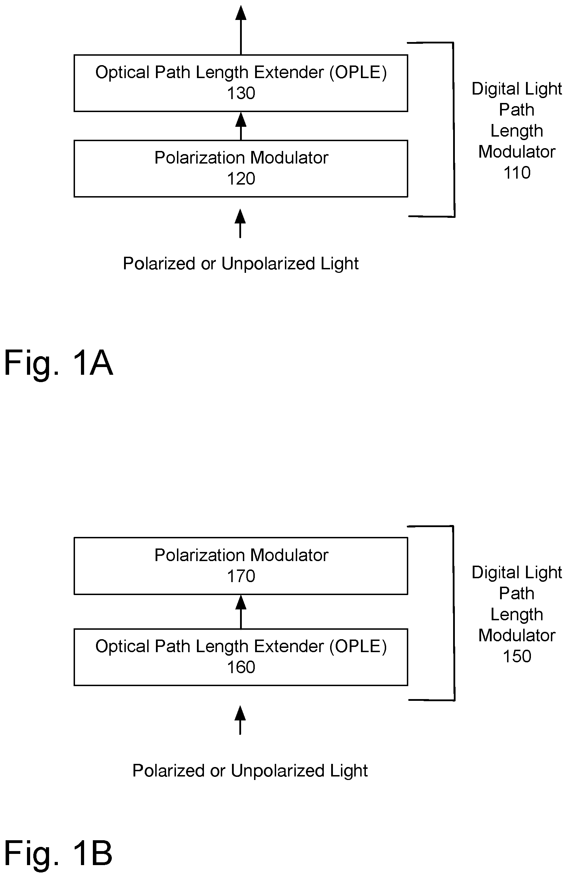

Figure 1A is a block diagram of one embodiment of the digital light path length modulator. The digital light path length modulator 110, includes an optical path length extender (OPLE) 130 and a polarization modulator 120. The polarized or unpolarized light impacts the polarization modulator 120. The polarization modulator 120 may rotate polarization, leave the polarization unchanged, and/or filter the light. The output of the polarization modulator 120 enters the OPLE 130. In one embodiment, the polarization modulator 120 is digital, thus providing a digital control to select light path length by turning on and off the polarization modulator 120. In one embodiment, the switching speed of the polarization modulator 120 is adjustable, and switching speed may be under 50 milliseconds. The combination of the polarization modulator 120 and OPLE 130 enables the digital light path length modulator 110 to selectively lengthen the light path.

Figure 1B is a block diagram of one embodiment of the digital light path length modulator. The digital light path length modulator 150 includes an OPLE 160 and a polarization modulator 170. In this instance, the polarization modulator 170 is placed after the OPLE 160. The polarization modulator 170 can act as a filter, to remove a portion of the light. Either configuration of the digital light path length modulator, shown in Figures 1A or 1B may be utilized. In one embodiment, a digital light path length modulator may include a polarization modulator on both sides of the OPLE.

The OPLE may comprise one or more plates with a plurality of polarization sensitive reflective elements. The OPLE does not need to be flat, and may in one embodiment be curved to provide additional optical features. The polarization sensitive reflective elements in the OPLE are substantially parallel in one embodiment. In another embodiment, they may not be parallel, but may be angled to provide other optical characteristics. The polarization sensitive reflective elements in the OPLE may be evenly spaced in one embodiment. In another embodiment, the spacing of the polarization sensitive reflective elements may vary along the length of the OPLE.

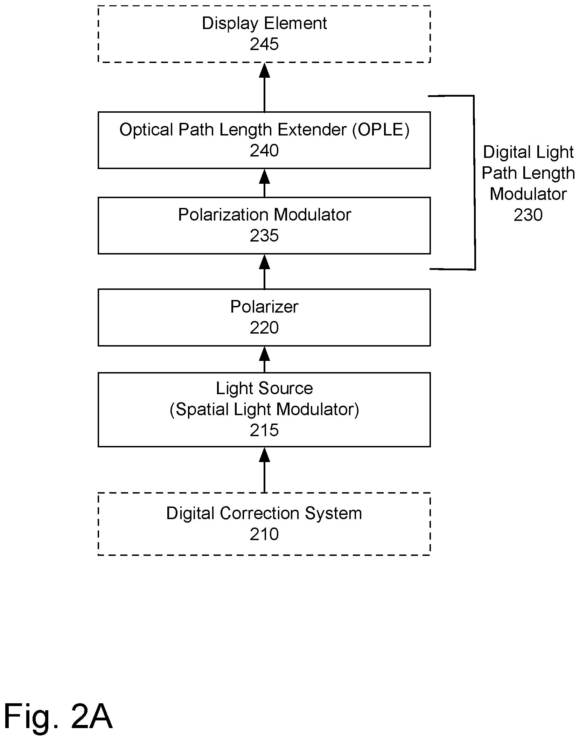

Figure 2A is a block diagram of one embodiment of a system in which the digital light path length modulator may be used. The system is for display. The light source 215 provides the light for display. The light source 215 may be a spatial light modulator.

In one embodiment, there may be a digital correction system 210, which adjusts the output of the light source to compensate for the predicted difference in the location of light of different polarizations coming out of the digital light path length modulator 230. By pre-adjusting the light, the resulting light regardless of its path length is properly positioned when it is displayed.

The digital correction system 210 spatially shifts the image elements entering the digital light path length modulator 230 which would be shifted by the digital light path length modulator 230, to place them in the correct location upon exit from the digital light path length modulator 230. The spatial shifting may include lateral shift correction, and correction for other artifacts of the system. Such pre-calculation of the output of a digital display system is known in the art. Digital correction systems 210 are utilized to correct for lens warping, color separation, and other issues. The digital correction system 210 creates an output which is in the "rendering state" such that the perceived image by the user is correct.

In one embodiment, the optical path length extender (OPLE) 240 may be configured to be self-aligned. That is, spatial shift between the light that travels the longer and the shorter path through the OPLE 240 may be eliminated, or may be set to an intentional spatial shift. The creation of such a self-aligned OPLE is discussed below.

In the embodiment of Figure 2A, the light from light source 215 is polarized by polarizer 220. The polarizer 220 may be eliminated if the light source 215 outputs polarized light, or may be integrated into the light source 215. The output of the polarizer 220 is light with one polarization.

The digital light path length modulator 230 includes a polarization modulator 235 and an OPLE 240. The polarization modulator 235, in one embodiment, is an electronically controlled element which can rotate the polarization of beams of light between two orthogonal states, state 1 and state 2, by selectively modulating the polarization of some or all of the light. In one embodiment, the orthogonal states are S-polarized and P-polarized light. The polarization modulator 235 may also be a filter which selectively filters light.

In one embodiment, the polarization modulator 235 is an electronically controlled liquid crystal device (LCD). In another embodiment, the polarization modulator may be a Faraday modulator, a switchable birefringent crystal (i.e. LiNO3), or another modulator, which can selectively modulate a portion or all of the light impacting it. In one embodiment, the polarization modulator 235 may selectively polarize the light based on other factors, such as color, wavelength, etc.

The polarization modulator 235 may modulate a subset of the light that impacts it, in one embodiment. In another embodiment, the polarization modulator 235 may modulate all of the light, and switch modulation in time sequential slices. Time sequential slices means that light impacting at time T is not modulated, while light impacting at T+x is modulated. Because the image perceived by a human user is constructed of a series of time sequential slices of data, in one embodiment, these slices are perceived as components of a single image. This is referred to as "biological real time," which is perceived as being concurrent by a human viewer, even though it is time sequential in processing.

The polarized or selectively polarized light impacts the OPLE 240. The OPLE 240 includes one or more plates, each plate having a plurality of polarization sensitive reflective elements, which reflect light having a first polarization, and pass through light with a second polarization. The reflected light bounces between the polarization sensitive reflective elements two or more times, before exiting the OPLE 240. This increases the path length of the light having the first polarization, compared to the light having the second polarization which passes directly through the OPLE 240. In one embodiment, the light exits the OPLE 240 at the same angle that it entered the OPLE 240.

Use of this system, alters the relative light path length of the light with the two polarizations, because the light with a first polarization travels through a longer path than the light with the second polarization.

Utilizing a plurality of digital light path length modulators 230 allows for a multitude of digitally selectable path lengths. Having the various selectable path lengths enables the creation of multiple focal lengths of light exiting the digital light path length modulator 230, since the light appears to be at different distances from the user, based on the length of the light path. In one embodiment, image elements formed by the light that has a longer light path appear further from a user.

In one embodiment, the OPLE 240 is self-aligned so that light exiting the OPLE 240 is not spatially shifted, or intentionally spatially shifted, regardless of polarization. The specific configuration of the OPLE 240, and its manufacture, is discussed in more detail below.

The OPLE 240 and polarization modulator 235 make up the digital light path length modulator 230. A digital light path length modulator 230 creates two or more light path lengths. Although only a single digital light path length modulator 230 is shown in Figure 2A, the system may include a modulation stack with a plurality of digital light path length modulators 230, to create an increasing number of light path lengths. This may be used to create more focal planes, to create a perception of a hologram. The system thus provides slices of a hologram at two or more focal planes. As the number of focal planes is increased, the output provides 3D cues that approach the limits of human perception. By utilizing a number of focal planes perceived by a user, the perception or recording of a digital hologram can be created.

The output of the digital light path length modulator 230 is displayed via display element 245, or through some other means. The display element 245 may provide a component for a three-dimensional display, with image elements displayed in different focal planes.

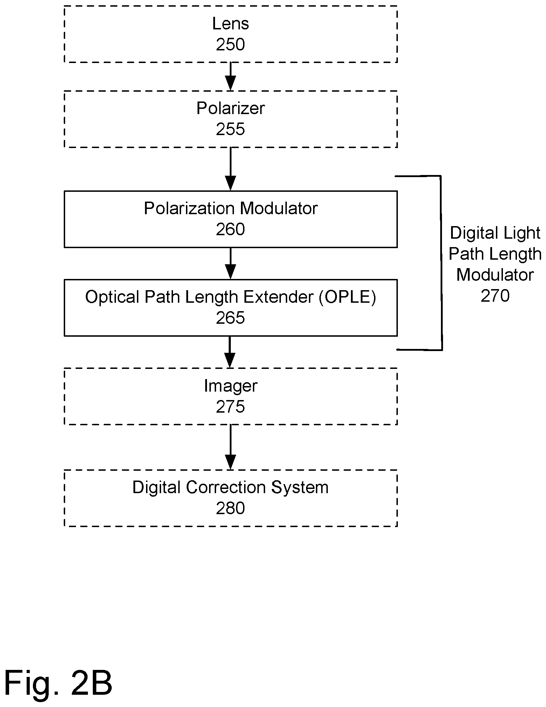

Figure 2B is a block diagram of another embodiment of the system in which the digital light path length modulator may be used. In this embodiment, rather than displaying light/images/data, the system captures light/images/data. In one embodiment, the initial image or data enters a lens 250. Polarizer 255 polarizes the light, if it is not already polarized when it is captured.

The polarized light is then selectively modulated by polarization modulator 260, and passed through OPLE 265. As noted above, within the OPLE 265, the differently polarized light has different path lengths. In one embodiment, a portion of light may be polarized so that a portion of an image embodied in the light goes through a longer light path than another portion. In one embodiment, all of the light may have the same polarization, and the changes in polarization and thus focal length may be varied in time sequential slices. In one embodiment, the system may combine concurrent and time-based light path adjustment.

Imager 275 captures or displays the image. The imager 275 may be an electronic image sensor, such as a charge coupled device (CCD) or a complementary metal oxide semiconductor (CMOS) sensor. The imager 275 may be another capture element, such as film, binoculars, scope, or any mechanism to capture or display an image. In one embodiment, a digital correction system 280 may be used to correct the captured or displayed image to account for any spatial shift between the light beams, because of the path they took. As noted above, in one embodiment, the OPLE 265 is self-aligned.

The OPLE 265 and polarization modulator 260 together form a digital light path length modulator 270. In one embodiment, although only a single digital light path length modulator 270 is shown, the system may include a modulation stack with a plurality of digital light path length modulators 270.

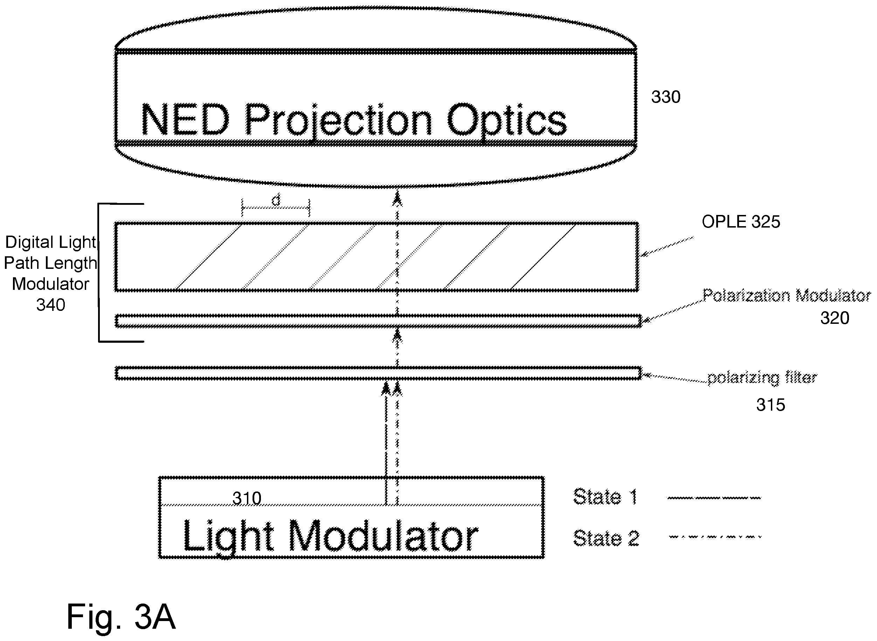

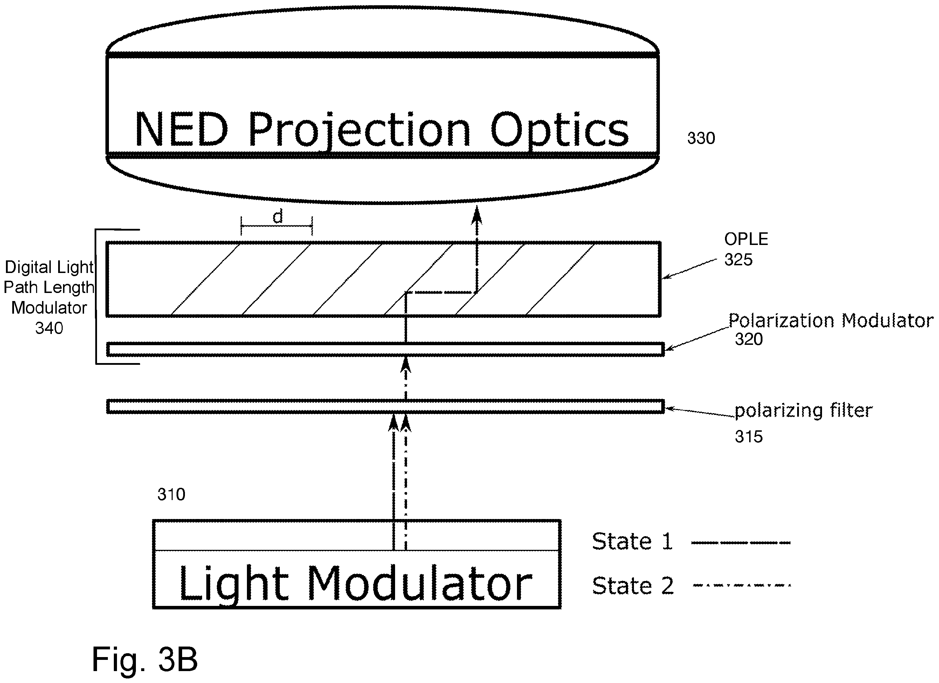

Figures 3A and 3B are diagrams of one embodiment of a digital light path length modulator in a near eye display (NED) system. The light modulator 310 outputs polarized light, both state 1 and state 2 polarized light, in one embodiment. Polarizing filter 315 removes the state 1 polarized light, and passes through state 2 polarized light only. The polarization modulator 320 in Figure 3A is "off," leaving the state 2 polarized light to pass through. In this context, the term "on" refers to a setting in which the polarization modulator 320 rotates the polarization of light, while the term "off" refers to the setting in which the polarization modulator 320 does not alter the polarization of light.

OPLE 325 has a plurality of polarization sensitive reflective elements, which reflect state 1 polarized light, while passing through state 2 polarized light. Here, state 2 polarized light is transmitted straight through (having the shorter light path.) The output in one embodiment is transmitted to near eye display (NED) projection optics 330. Of course, though it is not shown, additional optical elements may be included in this system, including lenses, correction systems, etc.

Figure 3B is a diagram of the digital light path length modulator of Figure 3A with the polarization modulator "on." Here, again, the polarizing filter passes only state 2 polarized light. However, here, the polarization modulator 320 modulates the light, and outputs state 1 polarized light. The state 1 polarized light is reflected by the polarization sensitive reflective elements in OPLE 325. Thus, this light goes through a longer light path.

A comparison of Figures 3A and 3B, shows that the state 1 polarized light has a longer light path than the state 2 polarized light. In this way, a digital light path length modulator 340 can change the light path length. While only a single digital light path length modulator 340 is shown here, a plurality of digital light path length modulators 340 may be stacked to provide a larger number of light path lengths.

Figures 3A and 3B show a time sequential embodiment, in which all of the light entering the digital light path length modulator 340 has one polarization, and is either modulated or not modulated by polarization modulator 320. In this example, the system switches between the states shown in Figure 3A and 3B, in time. The polarization modulator 320 may selectively modulate the polarization of a subset of the light, in one embodiment. In one embodiment, modulation may be based on location, time, color, wavelength, and optionally other differentiable factors.

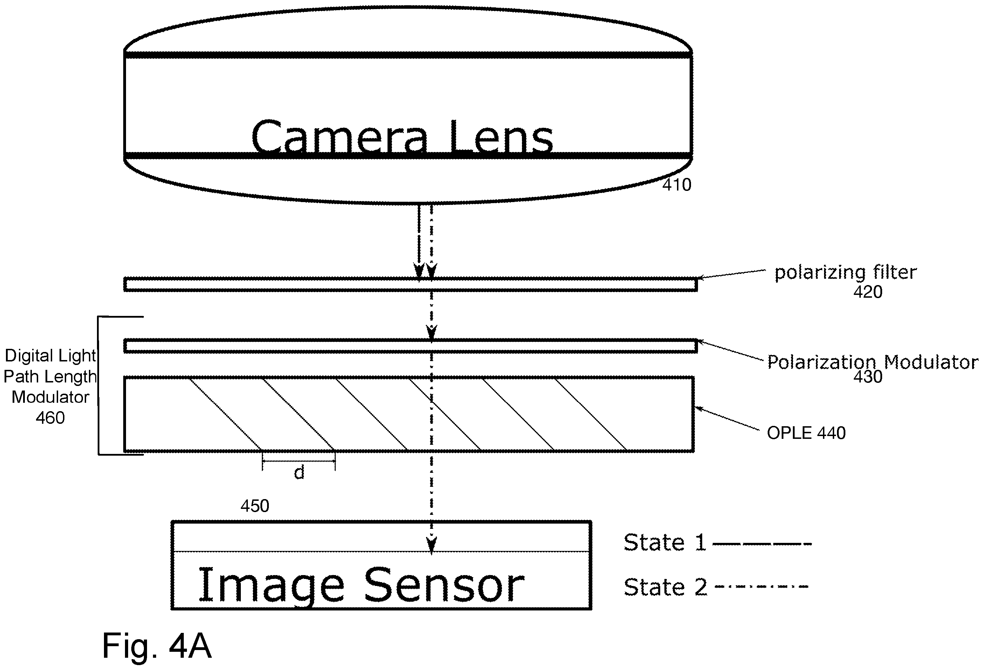

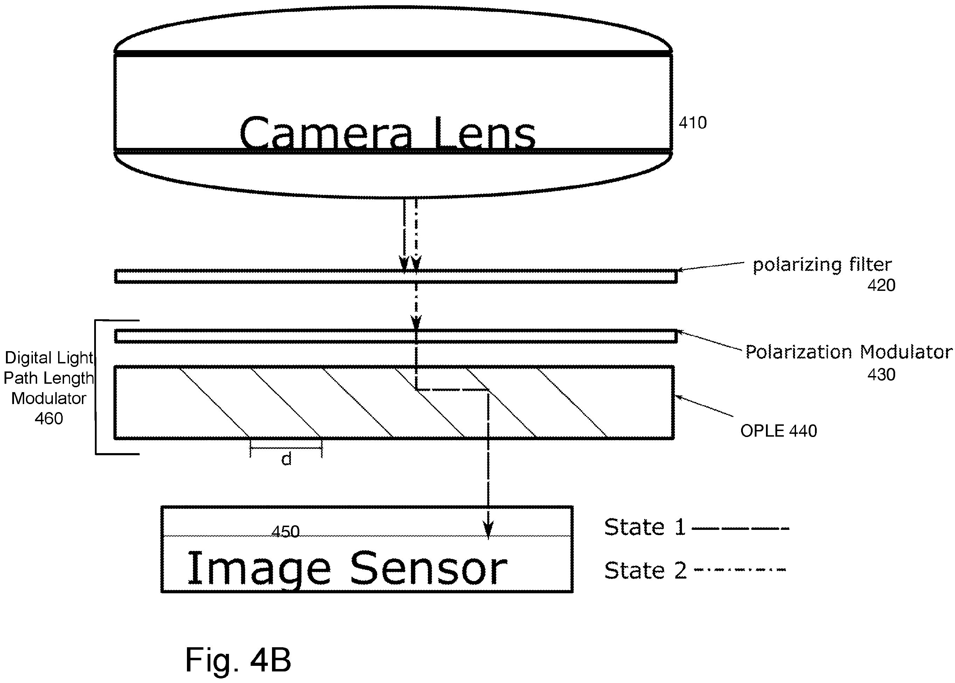

Figures 4A and 4B are diagrams of one embodiment of a digital light path length modulator in a camera system. The camera lens 410 captures the image data, and transmits it through the polarizing filter 420. The polarization modulator 430 selectively polarizes the light, and sends it through OPLE 440. The output from OPLE 440 goes to image sensor 450. The polarization modulator 430 is "off" in Figure 4A, and the state 2 polarized light is not modulated. The OPLE 440 does not reflect state 2 polarized light, and thus the light passes straight through the digital light path length modulator 460. The light coming out digital light path length modulator 460 impacts the image sensor 450. Of course, though it is not shown, additional optical elements may be included in this system, including lenses, correction systems, etc.

Figure 4B shows the same system when the polarization modulator 430 is on, and modulates the light to state 1 polarization. The state 1 polarized light goes through a longer light path, because it is reflected by the polarization sensitive reflective elements in the OPLE 440. This will cause objects at a nearer distance to come into focus without moving any elements of the imaging lens. Also, focus can be changed as fast as the polarization modulator can change states, which can be under 50 milliseconds. The OPLE 440 and polarization modulator 430 form a digital light path length modulator 460. In one embodiment, the system may include a plurality of digital light path length modulators 460.

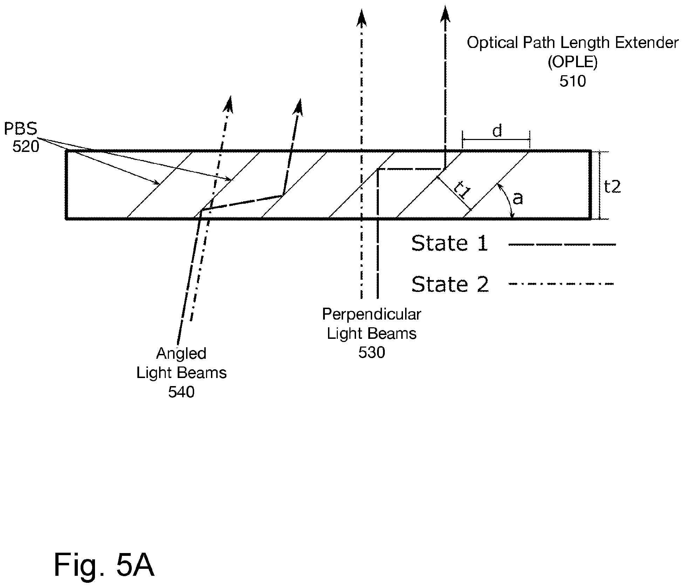

Figure 5A illustrates one embodiment of an optical path length extender (OPLE). The OPLE 510 includes a plurality of polarization sensitive reflective elements also referred to as a polarized beam splitters (PBS) 520, which selectively reflect light beams of one polarization state, while passing through light with the other polarization state. The two polarizations are referred to as state 1 and state 2 polarization. The polarization sensitive reflective elements 520 are evenly spaced, parallel to each other, a distance t1 apart from each other, in one embodiment. In another embodiment, the polarization sensitive reflective elements 520 may not be parallel, or evenly spaced.

The thickness of the OPLE 510, t2, in this example, is designed to have the reflected light beam bounce twice before exiting the OPLE 510. Angle "a" defines the angle of the polarization sensitive reflective elements 520 with respect to the face of the OPLE 510 where light enters. The relationship of t1, t2, and angle a define the path length of the light with the polarization state that is reflected. These values also define the position (location and angle) of the reflected polarized light exiting the OPLE 510.

As can be seen, in this example, state 2 polarized light passes straight through the OPLE 510, and state 1 polarized light is reflected through the polarization sensitive reflective element 520, and thus takes a longer light path.

This figure also illustrates that not all of the light impacts the OPLE perpendicular to the face of the OPLE 510. Because light spreads (when it is not collimated light), some of the light impacts as angled light beams 540. Figure 5A shows that the OPLE 510 provides path lengthening for light impacting at an angle. The change in angle as light enters the OPLE and is refracted is not shown in this figure or similar figures for simplicity.

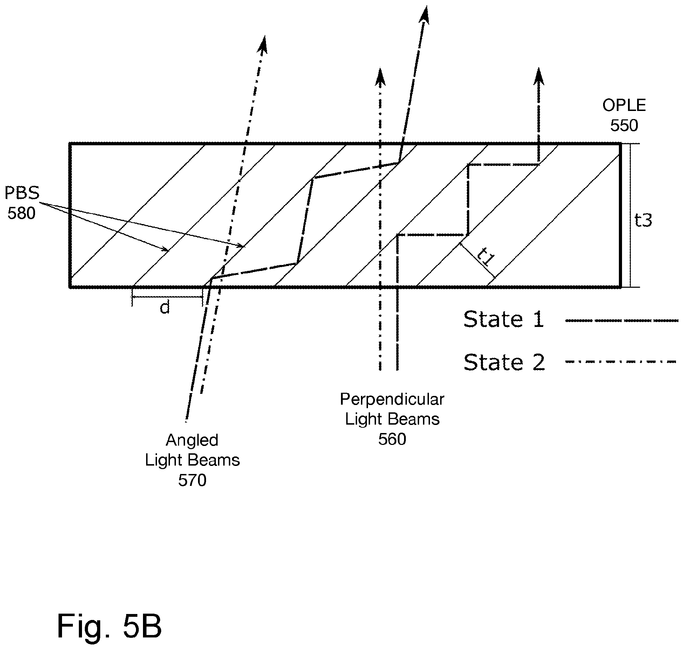

Figure 5B illustrates another embodiment of an OPLE 550, in which the OPLE 550 is thicker. In this example, the state 1 polarized light bounces multiple times within the OPLE 550. As can be seen from Figures 5A and 5B, the thickness of the OPLE impacts how much the light path is lengthened.

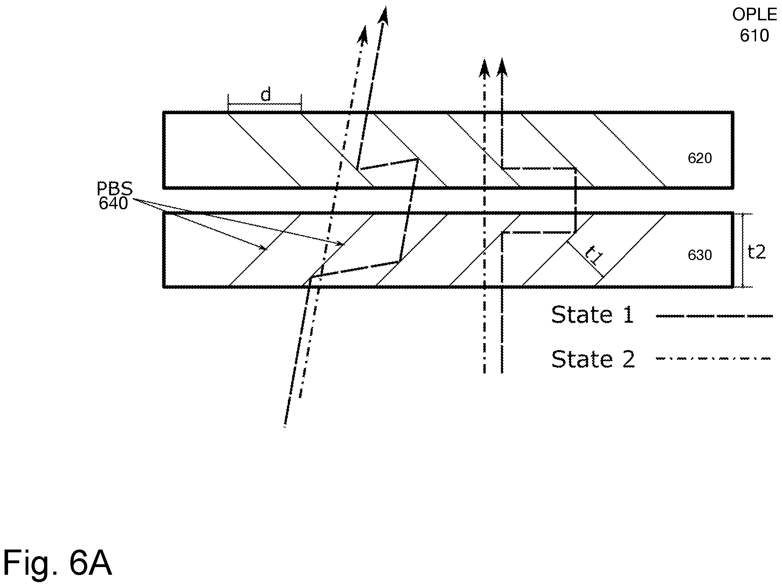

Figure 6A illustrates one embodiment of a self-aligned OPLE 610, which includes two plates 620, 630, that adjust the spatial shift of the reflected light. The self-aligned OPLE 610 can be used to spatially realign the reflected and passedthrough light. In one embodiment, the two plates 620, 630 are matched. As shown in Figure 6A, they may be matched by having the same thickness, t2, and mirror image polarization sensitive reflective elements 640. In one embodiment, two plates may be matched by having the spatial shift created by one of the plates 620 with a particular thickness, and angle of the polarization sensitive reflective elements be matched by a second plate 630 with a different thickness and/or angles, which is designed to provide a matching spatial shift.

Using the self-aligned OPLE adjusts the spatial shift between the light going through the shorter and longer light paths. In one embodiment, for a self-aligned OPLE 610 with two plates having mirrored 45 degree angled polarization sensitive reflective elements, the relative positions of the two light beams exiting the OPLE 610 is identical to their relative position entering the OPLE 610. This is useful to eliminate the need for correction of a spatial shift in the input or output. In one embodiment, the self-aligned OPLE 610 may also be used to intentionally set a particular spatial shift. The effective thickness of OPLE 610 is the cumulative thickness of the plates 620, 630 making up the OPLE 610, in this case 2*t2.

As shown in Figure 6A, there may be a gap between the two plates 620, 630 of OPLE 610. In one embodiment, the size of the gap is irrelevant, since light travels straight through the gap. In one embodiment, other optical elements, including other OPLEs, polarization modulators, etc. may be positioned between the two plates 620, 630. The plates of the self-aligned OPLEs 610 do not require spatial proximity, in one embodiment.

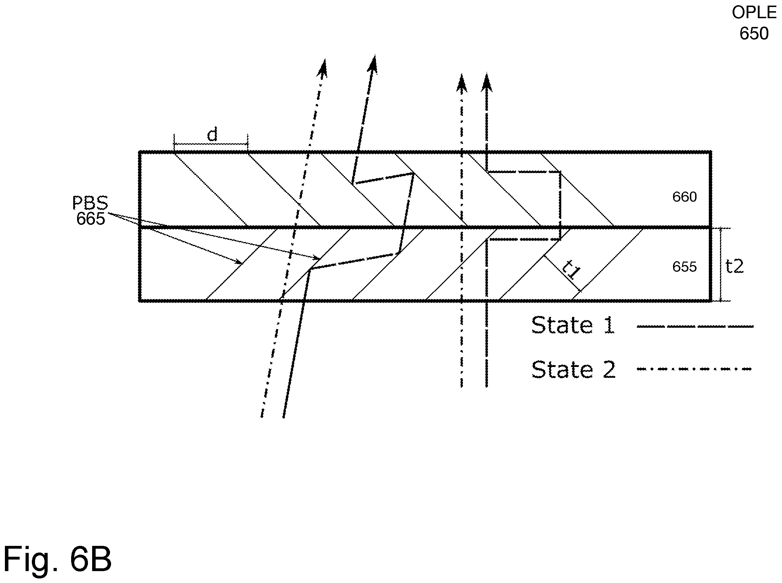

Figure 6B illustrates another embodiment of an OPLEs 650. In this example, there is no gap between the two plates 655, 660 of the OPLE 650. Furthermore, in this configuration, the polarization sensitive reflective elements 665 of the two plates 655, 660 are not aligned. However, they do have the same distance (d) between the polarization sensitive reflective elements. As can be seen, such shifts between the positioning of the parallel polarization sensitive reflective elements 655 do not alter the functioning of the OPLE 650.

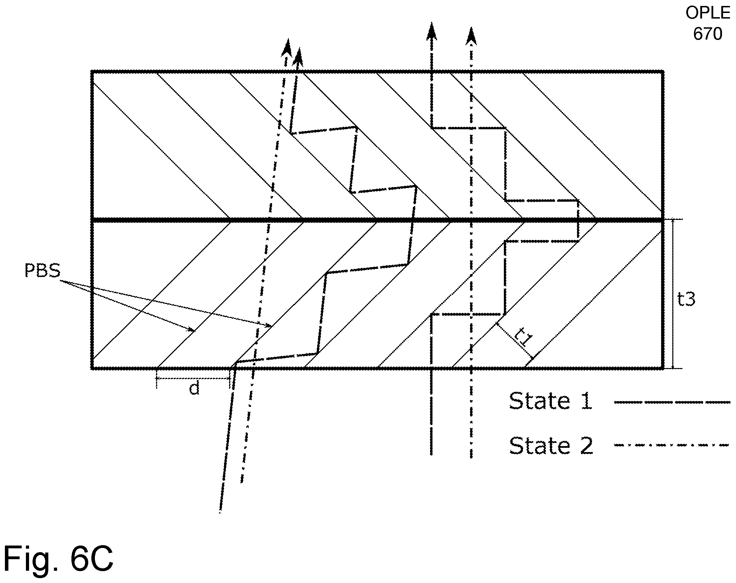

While the self-aligned OPLEs shown in Figures 6A and 6B show plates of thickness t2, it should be understood that the actual thickness of a plate is not limited. Figure 6C illustrates a self-aligned OPLE 670 in which the plates are much thicker, causing more lengthening of the light path between state 1 polarized light and state 2 polarized light. It should also be noted that the thickness of the two plates used in a self-aligned OPLE need not be matched.

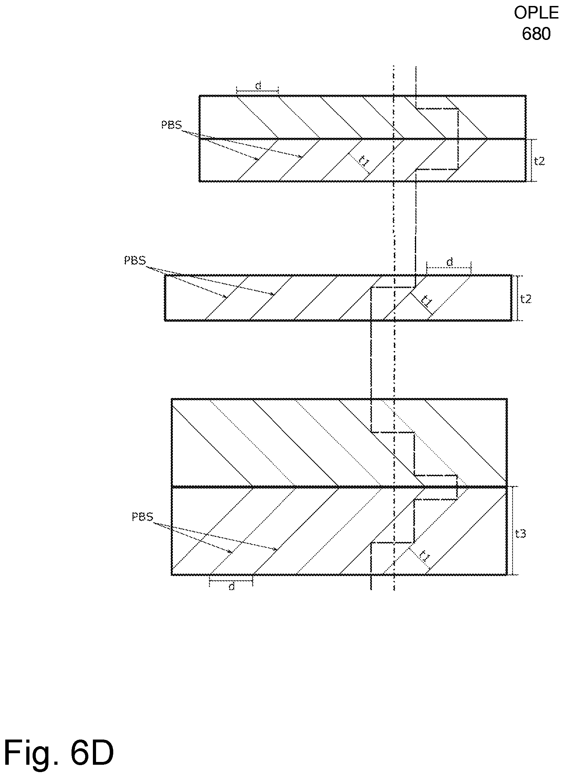

Figure 6D illustrates one embodiment of an OPLE 680 which includes a plurality of plates. A single OPLE 680 may include one or more plates with polarization sensitive reflective elements. In the example illustrated in Figure 6D, the OPLE 680 includes five plates. The effective thickness of OPLE 680 is the thickness of the plates making up the OPLE 680, in this case 2*t3+t2+2*t2.

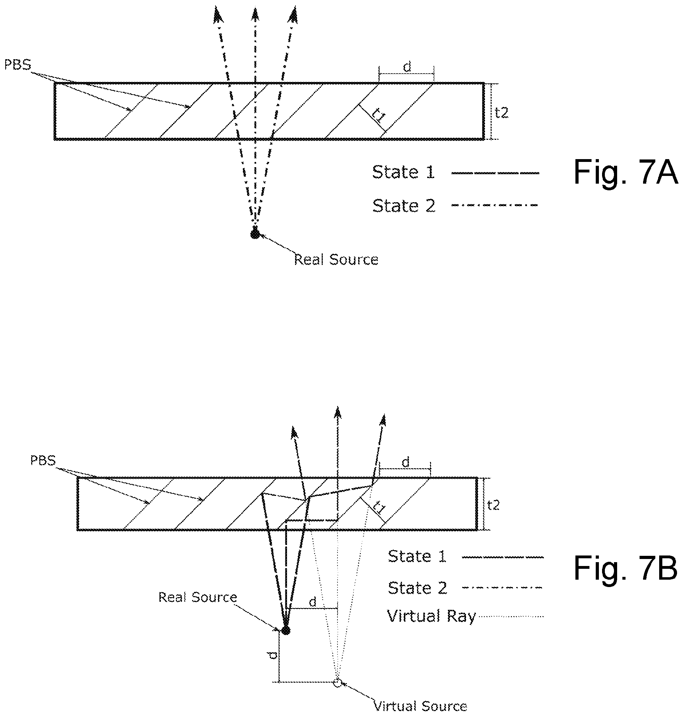

Figure 7A illustrates one embodiment of the effect of using an OPLE, with a light source for non-reflected light. As can be seen, in this example, for state 2 polarized light which is not reflected by the polarization sensitive reflective elements, the real light source and the "virtual" or perceived light source are in the same position. This figure additionally shows that for a real light source, light travels in a cone, rather than a straight light as is usually illustrated for simplicity.

Figure 7B illustrates one embodiment of the effect of using the OPLE of Figure 7A, with a light source for reflected light. In this illustration, state 1 polarized light is reflected. Thus, the user's perceived "virtual light source" is spatially shifted from the real light source. The lengthening of the light path shifts the virtual source vertically, while the movement of the light caused by the bounce shifts the apparent light source horizontally. In the example shown, the virtual light source is shifted to the right and back. The virtual rays show that the user's perception tracks back the light, to perceive the virtual source.

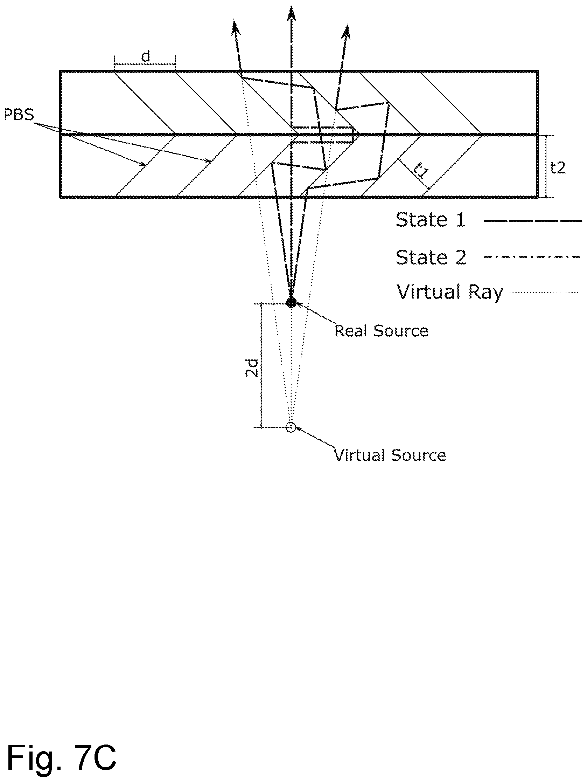

Figure 7C illustrates one embodiment of the effect of using a self-aligned OPLE, with a light source, for reflected light. As can be seen, by using the self-aligned OPLE, the virtual light source appears to further away (e.g. lengthening the focal length) but not shifted in position. Although the self-aligned OPLE shown in Figure 7C has no gap between the plates, as discussed above a gap, including a gap with additional optical elements could continue to provide this self-alignment feature. Furthermore, while the two plates in the shown self-aligned OPLE are matched, they need not have an identical thickness or angle for the polarization sensitive reflective elements, as discussed above.

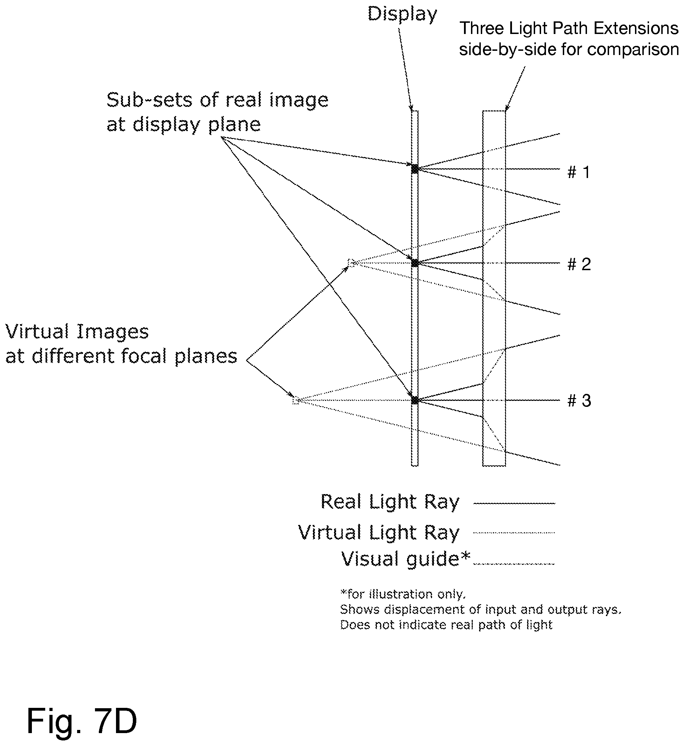

Figure 7D shows the effect of light extension, on a perceived image. The illustration shows three degrees of light extension side by side, for comparison. The first one passes the light without any lengthening, so the image is perceived at the focal plane of the display. The second one lengthens the light path, which causes the user to perceive the image at a different focal plane. The third one lengthens the light path further, which causes the user to perceive a virtual image at a third focal plane. Thus, by controlling the length of the light extension, a system can create virtual images and image elements at various focal points. Using the digital light path length modulator, the system can adjust the light path digitally, and selectively position virtual images at various focal lengths.

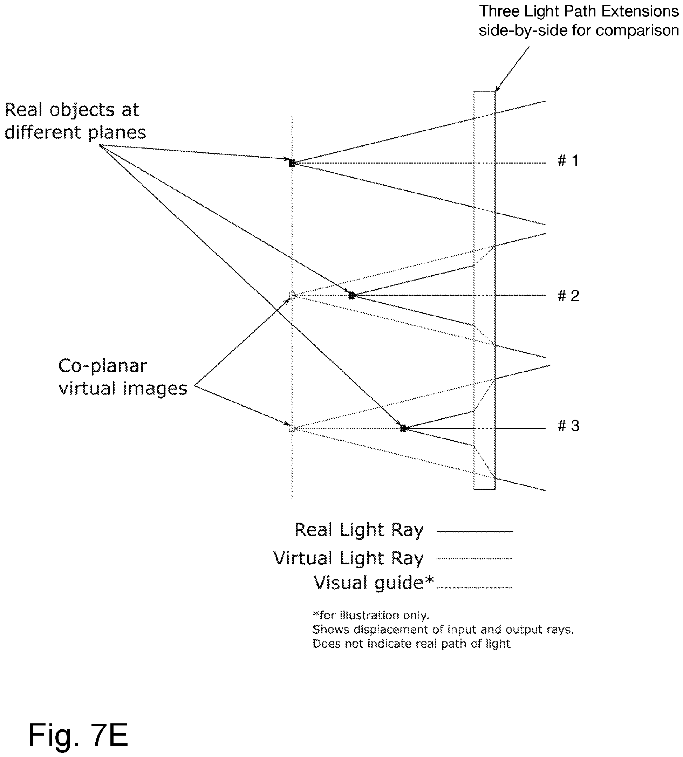

Figure 7E shows the effect of light extension on capturing image data, at different real planes. Because of the light extension, the virtual images appear co-planar, even when the real objects are at different planes.

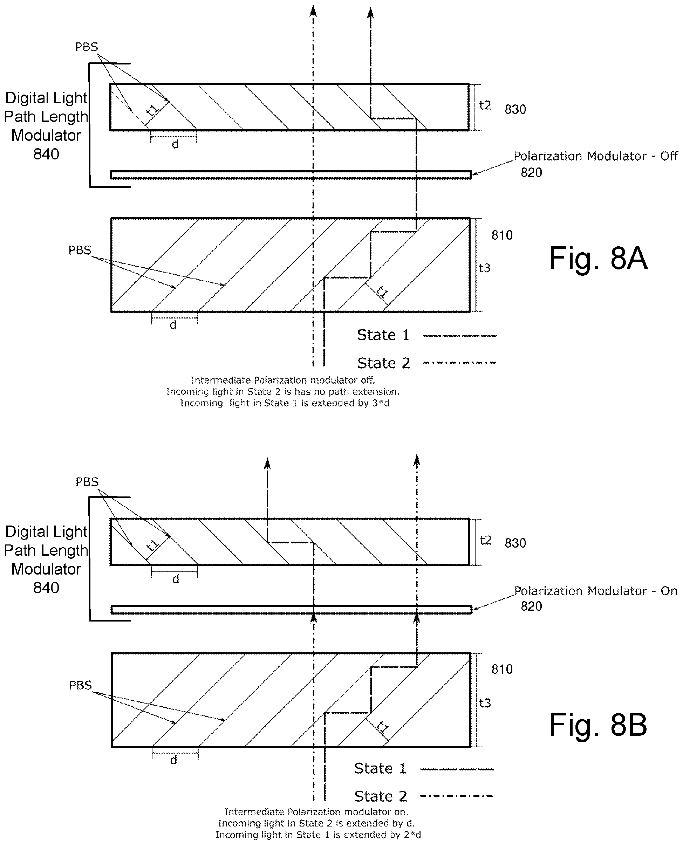

Figures 8A-8D illustrate embodiments of an OPLE combined with a digital light path length modulator, showing some examples of the various light path lengths which may be created. Figures 8A and 8B show a digital light path length modulator 840 and an OPLE 810.

In the example shown in Figure 8A, the polarization modulator 820 is "off," and thus the state 2 polarized light goes straight through both OPLEs 810, 830, while the state 1 polarized light is reflected in both OPLEs 810, 830. Thus, in this example, the light that is state 2 polarized entering the system is not extended at all, while the light that is state 1 polarized when it enters the system is extended, in this example by 3*d.

In contrast, in Figure 8B the polarization modulator 820 is "on," reversing polarization between the two OPLEs 810, 830. Therefore, the state 2 polarized light passes through the first OPLE 810, then is changed to state 1 polarized light, and is reflected in the second OPLE 830. The originally state 1 polarized light is reflected in the first OPLE 810, is changed to state 2 polarized light, and is passed through the second OPLE 830.

When the angle of the polarization sensitive reflective elements is at 45 degrees, as shown in Figures 8A and 8B, the length of the incoming state 2 polarized light is extended by d in the second OPLE 830, while the length of the incoming state 1 polarized light is extended by 2d, in the first OPLE 810. Thus, by utilizing a set of digital light path length modulators, a number of different light path lengths may be created.

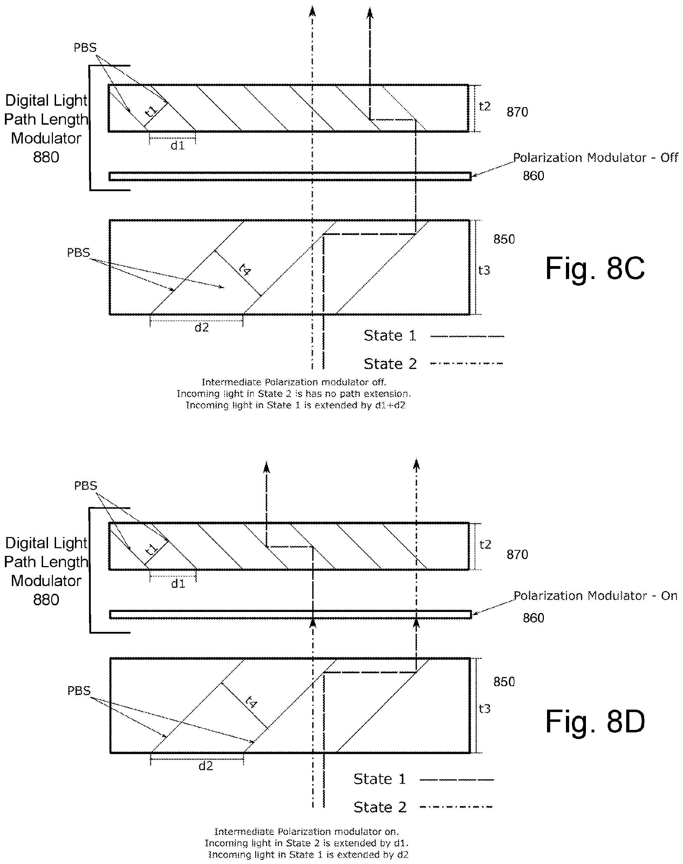

Figures 8C and 8D show another digital light path length modulator combined with an OPLE. In this example, the distance between the polarization sensitive reflective elements in the first OPLE 850 is different from the distance between the polarization sensitive reflective elements in the second OPLE 870. Thus, the extension of the beams is based on an addition of d1 (the distance between the polarization sensitive reflective elements of the first OPLE 850) and d2 (the distance between the polarization sensitive reflective elements of the second OPLE 870). Note that the reason the extension is by d+d2 is because the angle of the polarization sensitive reflective elements for both OPLEs 850, 870 is 45 degrees. If the angle is altered, the length of the light path extension may also be altered.

In this way, by tuning the light with the polarization modulator, and optionally varying the thickness of the OPLEs in a series of digital light path length modulators, the system can adjust the light path extension in discrete steps. That is, by adjusting the polarization of a light beam, while it passes through a plurality of OPLEs, the total path length of the light can be adjusted incrementally between a shortest length (where the light passes through all OPLEs without reflection) and a longest length (where the light is reflected by all of the OPLEs.)

In one embodiment, for OPLEs having different light path lengths - caused by one or more of different thickness, spacing or angle of the polarization sensitive reflective elements -- N OPLEs produce 2^N light path lengths. For identical OPLEs, N OPLEs produce N+1 light path lengths. In one embodiment, they may produce more light path lengths than N+1, or 2^N. In one embodiment, the thickness of an OPLE may range from 250 microns to 3 mm, though it may be larger or smaller.

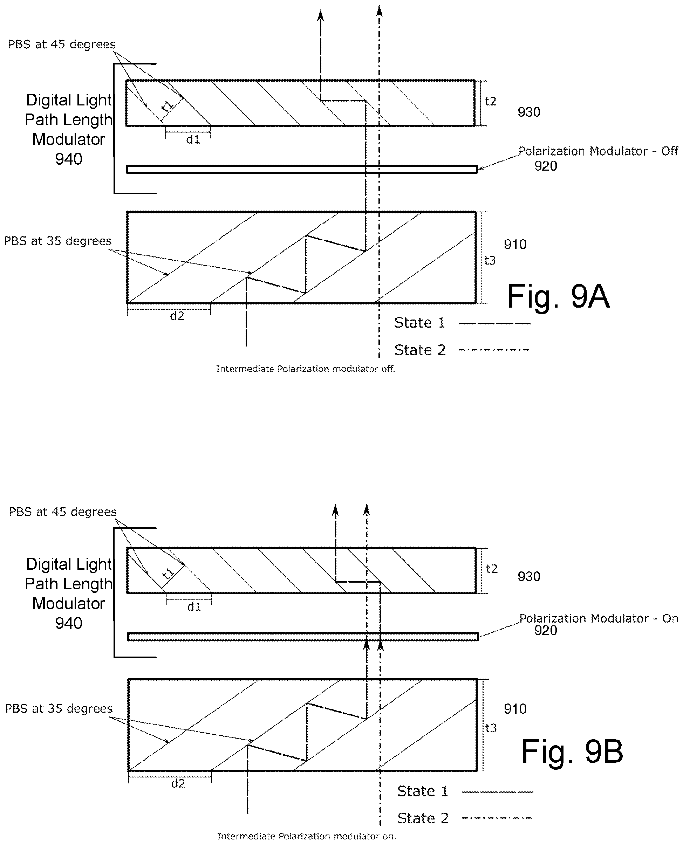

Figures 9A and 9B illustrate one embodiment an OPLE combined with a digital light path length modulator. In this example, the OPLE 930 in the digital light path length modulator 940 has the polarization sensitive reflective elements at a different angle than the other OPLE 910. As can be seen, the light path length adjustment in such an instance would be larger.

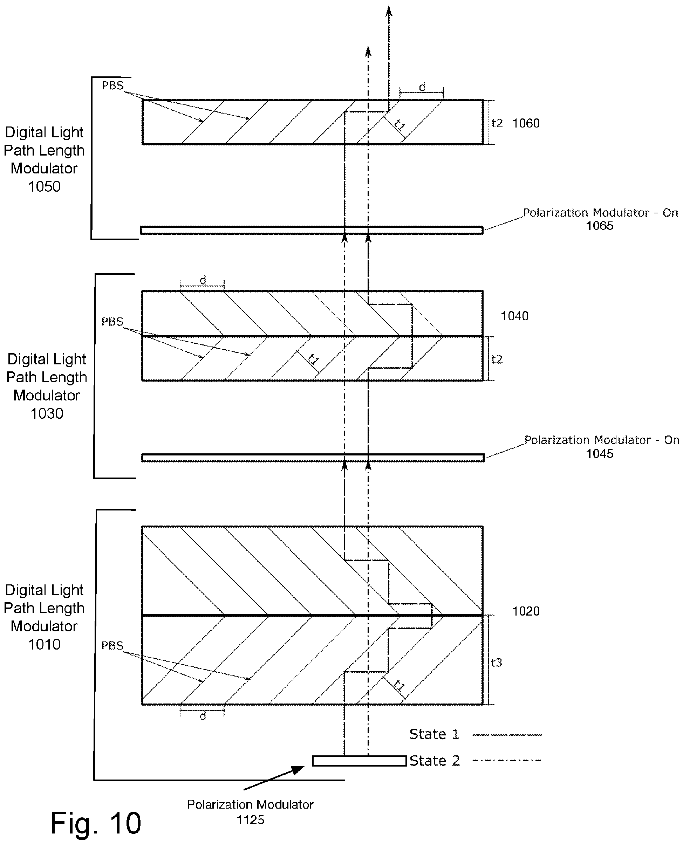

Figure 10 illustrates one embodiment of a modulation stack including three digital light path length modulators. Each of the digital light path length modulators 1010, 1030, 1050 includes a polarization modulator and an OPLE. In this example, two of the OPLEs 1020, 1040 are self-aligned OPLEs.

In various embodiments, one or more of the following variations may be made: the effective thickness of the OPLEs may vary, as may the angles of the polarization sensitive reflective elements, and the OPLE may include one, two, or more plates. The effective thickness of the OPLE is defined as the cumulative thickness of the plates which are parts of the OPLE. Thus the effective thickness of OPLE 1040 is different than the thickness of OPLE 1060, even though the individual plates in the two OPLEs 1040, 1060 are identical.

With the shown set of three different OPLEs, the system can create up to eight, 2³ focal lengths by selectively modulating the polarization, as follows:

| **OPLE 1** | **OPLE 2** | **OPLE 3** |
|---|---|---|
| State 1 | State 1 | State 1 |
| State 1 | State 1 | State 2 |
| State 1 | State 2 | State 1 |
| State 1 | State 2 | State 2 |
| State 2 | State 1 | State 1 |
| State 2 | State 1 | State 2 |
| State 2 | State 2 | State 1 |
| State 2 | State 2 | State 2 |

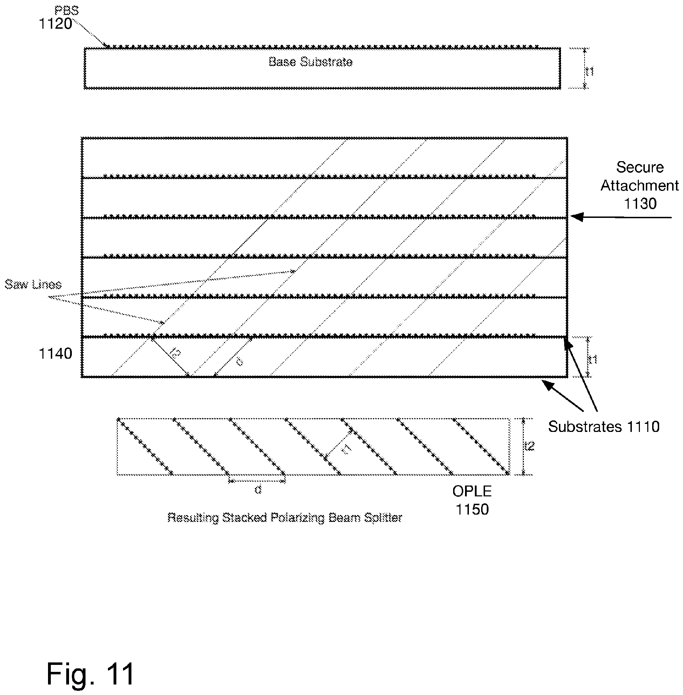

Figure 11 illustrates one embodiment of manufacturing plates to be used as OPLEs. One of the advantages of the present system is the ability to easily and affordably manufacture consistent OPLEs. Note that the manufacturing creates plates, one or more of which form an OPLE. As discussed above, an OPLE may include one or more such plates.

The OPLEs, in one embodiment, are made with a plurality of base substrates 1110 stacked. The substrates 1110 are made of material that is optically transparent to the wavelengths being modulated. In one embodiment, the substrate 1110 is made of glass. Alternatively, another material that is optically clear to the wavelengths used, such as plastic, transparent ceramic, silicon, sapphire, or other materials may be used. In one embodiment, each substrate 1110 is between 250 microns and 3mm thick. The thickness of the substrate defines the spacing of the polarization sensitive reflective elements in the final OPLEs.

Deposited on each substrate 1110 is a polarization sensitive reflective element 1120, also referred to as a polarized beam splitter (PBS). In one embodiment, the polarization sensitive reflective element 1120 is a dielectric film. The dielectric film may be deposited in various ways. In one embodiment, the dielectric film comprises oxide/nitride stacks which are spun, vapor deposited, or annealed, or evaporated onto the substrate. The polarization sensitive reflective element in another embodiment is a wire grid, nanoscale wire lines forming a closely spaced grid. In one embodiment, the sizing of the wire grid is wires that are 100 nm wide, with a 200 nm pitch. The spacing of the grid lines is smaller than the wavelength of the light.

The substrates 1110 with the polarization sensitive reflective elements 1120 are then attached to each other. The attachment may use adhesion, fusing, or other methods of securing together the substrates 1110, in one embodiment. In one embodiment, the adhesive used is optically clear glue. In one embodiment, the substrates 1110 may be attached via a scaffolding, in which the substrates 1110 are spaced apart using a support structure, rather than adhered or otherwise directly attached. Other methods of securing substrates together may be used. At a minimum, three substrates 1110 with polarization sensitive reflective elements 1120 are stacked to form an OPLE, while at a maximum the number of substrates 1110 may be in the hundreds.

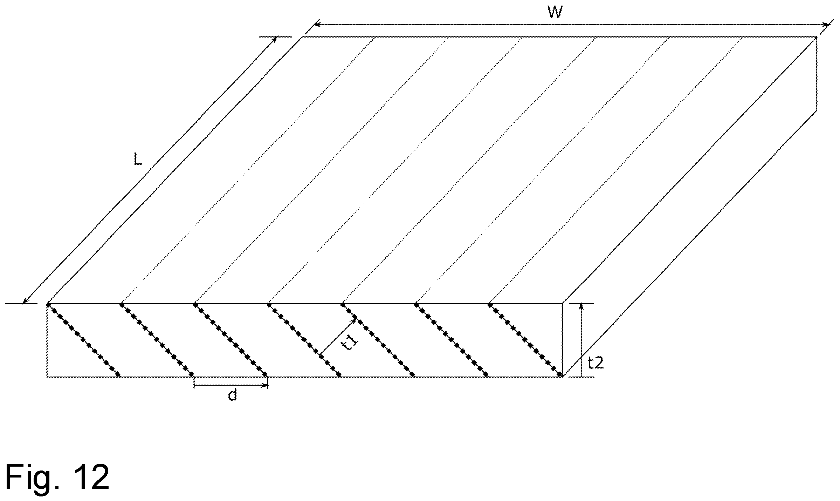

Once the adhesive or other attachment mechanism 1130 is fully secured, the OPLEs are cut apart, at saw lines 1140. The angle of the saw lines 1140 is between 20 and 70 degrees, and defines the angle of the polarization sensitive reflective elements 1120 in the OPLE 1150. In a preferred embodiment, the saw lines are at a 45 degree angle. In one embodiment, the thickness of the OPLEs is between 250 microns and 3 mm. Figure 12 illustrates a perspective view of an OPLE, having a length and width, and a thickness t2.

Returning to Figure 11, the process shown produces consistent OPLEs 1150 with polarization sensitive reflective elements 1120 at an angle between 20 to 70 degrees. These plates may be used for an OPLE which provides a staircase effect for lengthening the light path, which may be controlled by digitally modulating the polarization of the light impacting the OPLE. The OPLE and the digital light path length modulator is easily and consistently manufactured, and takes up very little space.

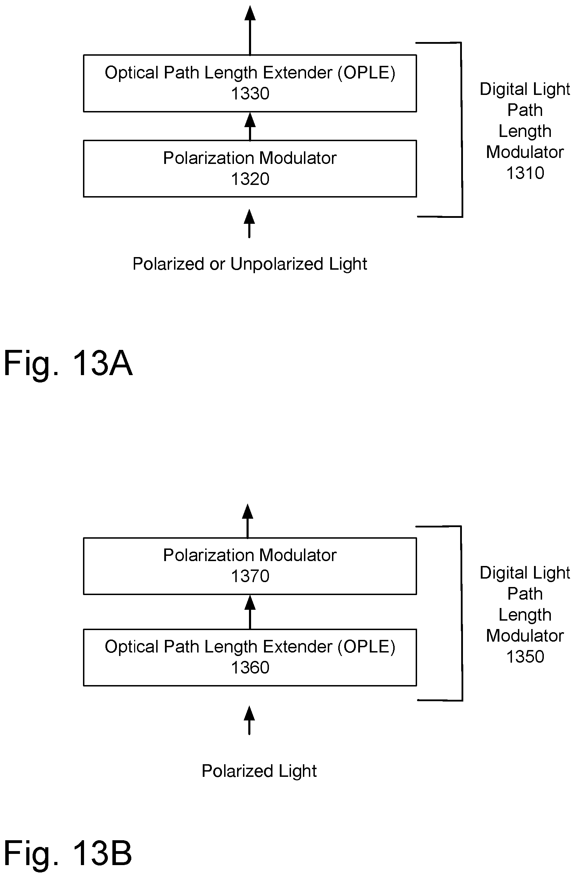

Figure 13A is a block diagram of one embodiment of the digital light path length modulator. The digital light path length modulator 1310, includes an optical path length extender (OPLE) 1330 and a polarization modulator 1320. The polarized or unpolarized light impacts the polarization modulator 1320. The polarization modulator 1320 may rotate polarization, leave the polarization unchanged, and/or filter the light. The output of the polarization modulator 1320 enters the OPLE 1330. In one embodiment, the polarization modulator 1320 is digital, thus providing a digital control to select light path length by turning on and off the polarization modulator 1320. In one embodiment, the switching speed of the polarization modulator 1320 is adjustable, and switching speed may be under 50 milliseconds. The combination of the polarization modulator 1320 and OPLE 1330 enables the digital light path length modulator 1310 to selectively lengthen the light path.

Figure 13B is a block diagram of one embodiment of the digital light path length modulator. The digital light path length modulator 1350 includes an OPLE 1360 and a polarization modulator 1370. In this instance, the polarization modulator 1370 is placed after the OPLE 1360. The polarization modulator 1370 can act as a filter, to remove a portion of the light. Either configuration of the digital light path length modulator, shown in Figures 13A or 13B may be utilized. In one embodiment, a digital light path length modulator may include a polarization modulator on both sides of the OPLE.

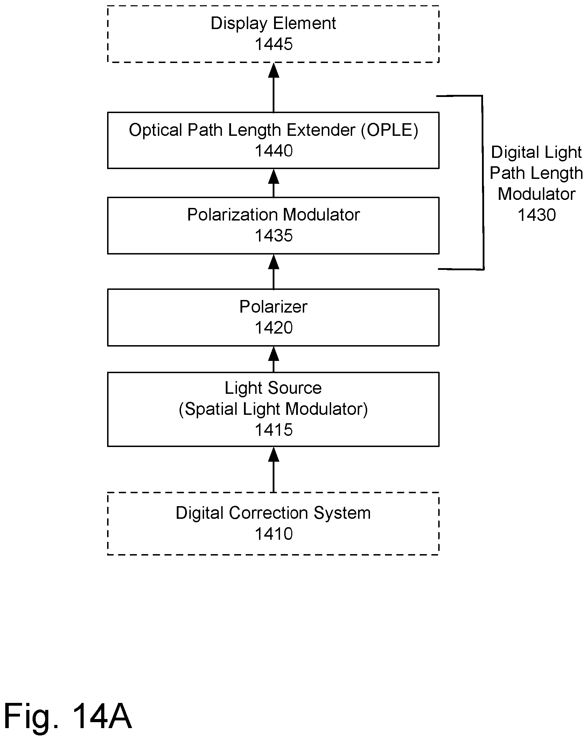

Figure 14A is a block diagram of one embodiment of a system in which the digital light path length modulator may be used. The system is for display. The light source 1415 provides the light for display. The light source 1415 may be a spatial light modulator.

In one embodiment, there may be a digital correction system 1410, which adjusts the output of the light source to compensate for the predicted difference in the location of light of different polarizations coming out of the digital light path length modulator 1430. By pre-adjusting the light, the resulting light regardless of its path length is properly positioned when it is displayed.

The digital correction system 1410 in one embodiment changes the brightness of the light having a particular polarization through the digital light path length modulator 1430, to correct for the loss of brightness due to the OPLE. The digital correction system 1410 in one embodiment spatially shifts the image elements entering the digital light path length modulator 1430 which may be shifted by the digital light path length modulator 1430, to place them in the correct location upon exit from the digital light path length modulator 1430.

The corrections from digital correction system 1410 may include brightness, lateral shift, and correction for other artifacts of the system. Such pre-calculation of the output of a digital display system is known in the art. Digital correction systems 1410 are utilized to correct for lens warping, color separation, and other issues. The digital correction system 1410 creates an output which is in the "rendering state" such that the perceived image by the user is correct.

In one embodiment, the optical path length extender (OPLE) 1440 may not produce any spatial shift between the light that travels the longer and the shorter path through the OPLE 1440. In one embodiment, the OPLE 1440 may produce a spatial shift or may be set to an intentional spatial shift.

In the embodiment of Figure 14A, the light from light source 1415 is polarized by polarizer 1420. The polarizer 1420 may be eliminated if the light source 1415 outputs polarized light, or may be integrated into the light source 1415. The output of the polarizer 1420 is light with one polarization.

The digital light path length modulator 1430 includes a polarization modulator 1435 and an OPLE 1440. The polarization modulator 1435, in one embodiment, is an electronically controlled element which can rotate the polarization of beams of light between two orthogonal states, state 1 and state 14, by selectively modulating the polarization of some or all of the light. In one embodiment, the orthogonal states are clockwise and counterclockwise circularly polarized light. In one embodiment, the two orthogonal states are S-polarized and P-polarized linearly polarized light. The polarization modulator 1435 may also be a filter which selectively filters light.

In one embodiment, the polarization modulator 1435 is an electronically controlled liquid crystal device (LCD). In another embodiment, the polarization modulator may be a Faraday modulator, a switchable birefringent crystal (i.e. LiNO3), or another modulator, which can selectively modulate a portion or all of the light impacting it. In one embodiment, the polarization modulator 1435 may selectively polarize the light based on other factors, such as color, wavelength, etc.

The polarization modulator 1435 may modulate a subset of the light that impacts it, in one embodiment. In another embodiment, the polarization modulator 1435 may modulate all of the light, and switch modulation in time sequential slices. Time sequential slices means that light impacting at time T is not modulated, while light impacting at T+x is modulated. Because the image perceived by a human user is constructed of a series of time sequential slices of data, in one embodiment, these slices are perceived as components of a single image. This is referred to as "biological real time," which is perceived as being concurrent by a human viewer, even though it is time sequential in processing.

The polarized or selectively polarized light impacts the OPLE 1440. The OPLE 1440 reflects light having a first polarization, and passes through light with a second polarization. The reflected light bounces, before exiting the OPLE 1440. This increases the path length of the light having the first polarization, compared to the light having the second polarization which passes directly through the OPLE 1440. In one embodiment, the light exits the OPLE 1440 at the same angle that it entered the OPLE 1440.

Use of this system alters the relative light path length of the light with the two polarizations, because the light with a first polarization travels through a longer path than the light with the second polarization.

Utilizing a plurality of digital light path length modulators 1430 allows for a multitude of digitally selectable path lengths. Having the various selectable path lengths enables the creation of multiple focal lengths of light exiting the digital light path length modulator 1430, since the light appears to be at different distances from the user, based on the length of the light path. In one embodiment, image elements formed by the light that has a longer light path appear further from a user.

In one embodiment, light exiting the OPLE 1440 is not spatially shifted, or intentionally spatially shifted, regardless of polarization. The specific configurations of an OPLE 1440, and its manufacture, is discussed in more detail below.

The OPLE 1440 and polarization modulator 1435 make up the digital light path length modulator 1430. A digital light path length modulator 1430 creates two or more light path lengths. Although only a single digital light path length modulator 1430 is shown in Figure 14A, the system may include a modulation stack with a plurality of digital light path length modulators 1430, to create an increasing number of light path lengths. This may be used to create more focal planes, to create a perception of a hologram. The system thus provides slices of a hologram at two or more focal planes. As the number of focal planes is increased, the output provides 3D cues that approach the limits of human perception. By utilizing a number of focal planes perceived by a user, the perception or recording of a digital hologram can be created.

The output of the digital light path length modulator 1430 is displayed via display element 1445, or through some other means. The display element 1445 may provide a component for a three-dimensional display, with image elements displayed in different focal planes.

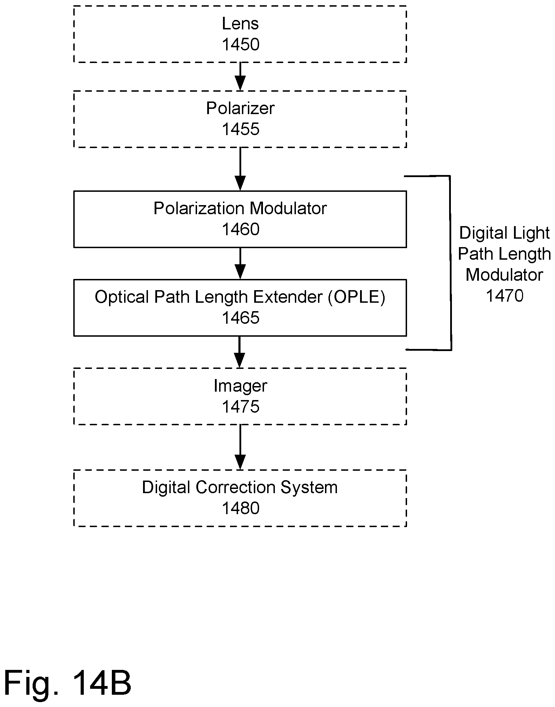

Figure 14B is a block diagram of another embodiment of the system in which the digital light path length modulator may be used. In this embodiment, rather than displaying light/images/data, the system captures light/images/data. In one embodiment, the initial image or data enters a lens 1450. Polarizer 1455 polarizes the light, if it is not already polarized when it is captured.

The polarized light is then selectively modulated by polarization modulator 1460, and passed through OPLE 1465. As noted above, within the OPLE 1465, the differently polarized light has different path lengths. In one embodiment, a portion of light may be polarized so that a portion of an image embodied in the light goes through a longer light path than another portion. In one embodiment, all of the light may have the same polarization, and the changes in polarization and thus focal length may be varied in time sequential slices. In one embodiment, the system may combine concurrent and time-based light path adjustment.

Imager 1475 captures or displays the image. The imager 1475 may be an electronic image sensor, such as a charge coupled device (CCD) or a complementary metal oxide semiconductor (CMOS) sensor. The imager 1475 may be another capture element, such as film, binoculars, scope, or any mechanism to capture or display an image. In one embodiment, a digital correction system 1480 may be used to correct the captured or displayed image to account for differences in brightness/light level or spatial shift between the light beams, because of the path they took.

The OPLE 1465 and polarization modulator 1460 together form a digital light path length modulator 1470. In one embodiment, although only a single digital light path length modulator 1470 is shown, the system may include a modulation stack with a plurality of digital light path length modulators 1470.

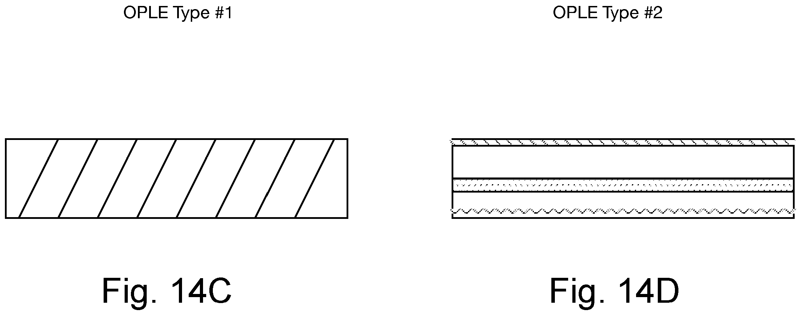

Figure 14C is a diagram of one embodiment of a first type of OPLE, referred to as a transverse OPLE. The OPLE includes one or more plates, each plate having a plurality of polarization sensitive reflective elements, which reflect light having a first polarization, and pass through light with a second polarization. The reflected light bounces between the polarization sensitive reflective elements two or more times, before exiting the OPLE. This increases the path length of the light having the first polarization, compared to the light having the second polarization which passes directly through the transverse OPLE.

Figure 14D is a diagram of one embodiment of a second type of OPLE, referred to as a longitudinal OPLE not according to the claimed invention. The OPLE includes a reflective element on the bottom surface, which reflects light having a first polarization. The light in turn bounces back from the top of the OPLE, before exiting the OPLE through the bottom surface. This increases the path length of the light having the first polarization, compared to the light having the second polarization which passes directly through the longitudinal OPLE.

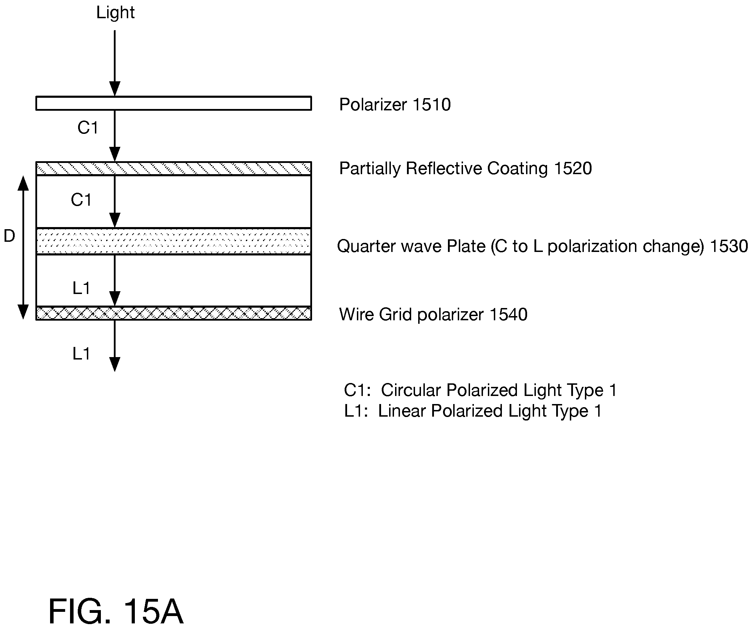

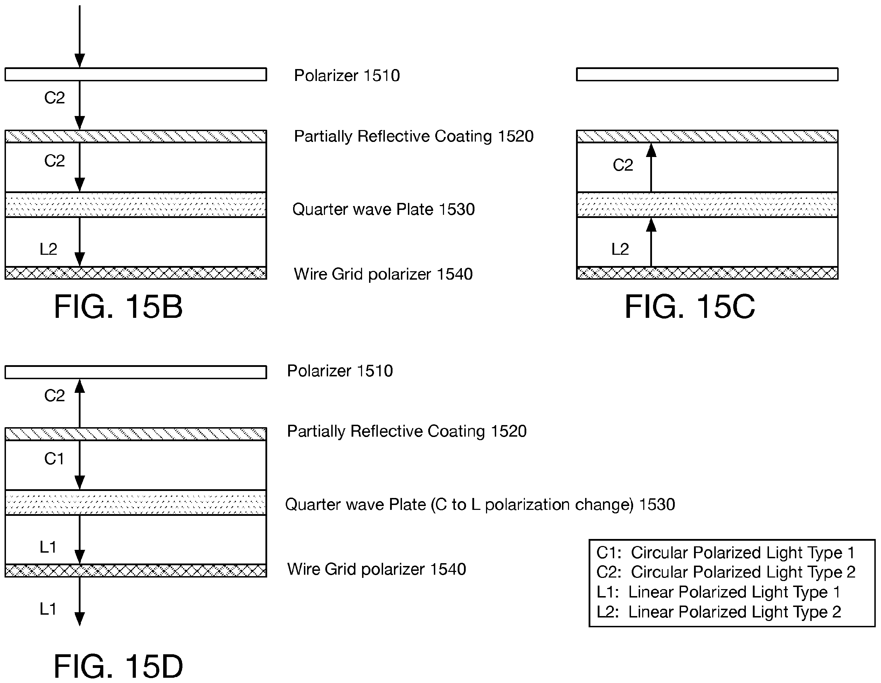

Figures 15A-15D illustrate one embodiment of the light paths in a cross-sectional view of one embodiment of an optical path length extender (OPLE) not according to the claimed invention. The OPLE includes an entry surface, coated by a partially reflective coating 1520, a quarter wave plate 1530, and a wire grid polarizer 1540. In this example, the light polarization is defined in the direction of propagation. For example, in one embodiment:
- C1 polarization is right handed circular polarization,
- C2 polarization is left handed circular polarization,
- L1 polarization is s-type linear polarization,
- L2 polarization is p-type linear polarization.
Of course these particular polarizations are merely exemplary, and the actual polarizations are two sets of orthogonal polarizations. One of skill in the art would understand that the polarizations may be altered without changing the invention.

For light with polarization type two, here C1 (circular polarization type 1), the light passes through the partially reflective coating 1520, passes through the quarter wave plate 1530, and exits through wire grid polarizer 1540. The quarter wave plate 1530 alters the C1 polarization to an L1 polarization, so the exiting light is L1 polarized. This may be input to another digital light path length modulator.

Figure 15B-15D show the path taken by light with polarization C2 (circular polarization of type 2), as it impacts the OPLE. It is changed to polarization L2 by the quarter wave plate 1530. Light with polarization L2 is reflected by the wire grid polarizer 1540. Figure 15C shows the path of the reflected light, returning through the quarter wave plate, which re-converts it to C2 polarization. It then impacts the partially reflective coating 1520.

The partially reflective coating 1520 reflects a portion of the light, as C1 polarized light, and permits the rest of the light to pass through, as C2 polarized light. The now C1 polarized light passes through the quarter wave plate one more time, before exiting through the wire grid polarizer. Thus, the path of the light entering with the C2 polarization is three times the length of the path of light entering with the C1 polarization, since it reflects back up through the OPLE, and down through the OPLE a second time, before exiting. However, there is no lateral shift of the virtual source during this process.

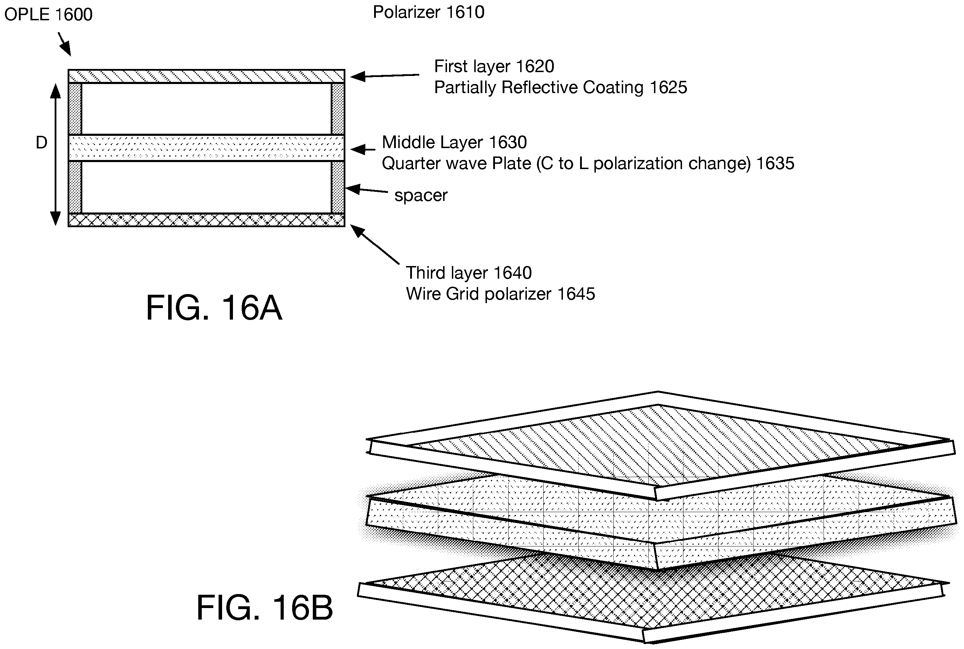

Figure 16A illustrates another embodiment of an OPLE not according to the claimed invention. OPLE 1600 includes a first layer 1620 with a partially reflective coating 1625, a middle layer 1630 comprising a quarter wave plate 1635, and a third layer 1640 including a wire grid polarizer 1645. OPLE 1600 in one embodiment utilizes spacers 1650 between each of the layers. In another embodiment, the layers may be attached to each other.

The partially reflective coating 1625 is applied to a first layer 1620. The partial reflective coating 1625 is one embodiment a thin layer of a reflective metal or dielectric, in the 160-100 angstrom thickness. In one embodiment, material is aluminum or silver. In one embodiment, partially reflective coating 1625 is applied to a bottom of the first layer 1620. In one embodiment, the middle layer 1630 is entirely made of quarter wave plate 1635, or may have a quarter wave plate portion. The quarter wave plate may be mica, or a polymer plastic. There is no limitation on a size of the quarter wave. The bottom layer includes a wire grid polarizer 1645, which may be applied to the top of the third layer. Each of the layers is made of a material clear to the type of light that is used with the OPLE. The material may be a glass, plastic, sapphire, or other material. The thickness of the OPLE is selected to optimize the value of the light path lengthening. In one embodiment, the reflective elements may be shaped, rather than flat.

Figure 16B illustrates a perspective view of one embodiment of the elements of an OPLE. As can be seen the layers may be separately made and then either attached using spacers, or using intermediate layers of glass or other materials. The height of the OPLE is defined by the size of the layers, including intermediate layers or spacers. The height controls the lengthening of the optical path.

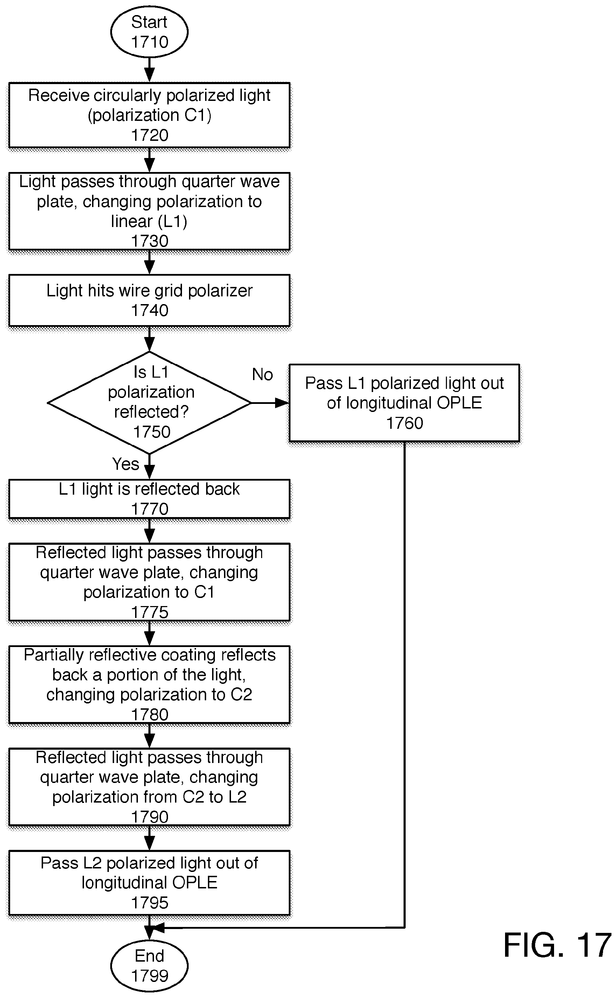

Figure 17 is a flowchart of light path extension through one embodiment of an OPLE not according to the claimed invention. The process starts at block 1710. At block 1720, circularly polarized light is received, with polarization C1. The light passes through the quarter wave plate, changing polarization to linear (L1). The light hits the wire grid polarizer at block 1740.

At block 1750, it is determined whether the light of polarization L1 will be reflected by the wire grid polarizer. If the L1 polarized light is not reflected, at block 1760 the L1 polarized light is passed through the wire grid polarizer, and exits the longitudinal OPLE.

If the L1 polarization is reflected, as determined at block 1750, at block 1770 the light is reflected back through the OPLE. At block 1775, the reflected light passes through the quarter wave plate again, changing the polarization from the L1 to C1.

At block 1780, the partially reflective coating reflects back a portion of the light. The reflected portion of the light changes polarization to C2. The twice reflected light passes through the quarter wave plate again, changing the polarization from C2 to L2.

At block 1795, the L2 polarized light passes out of the longitudinal OPLE. The process then ends.

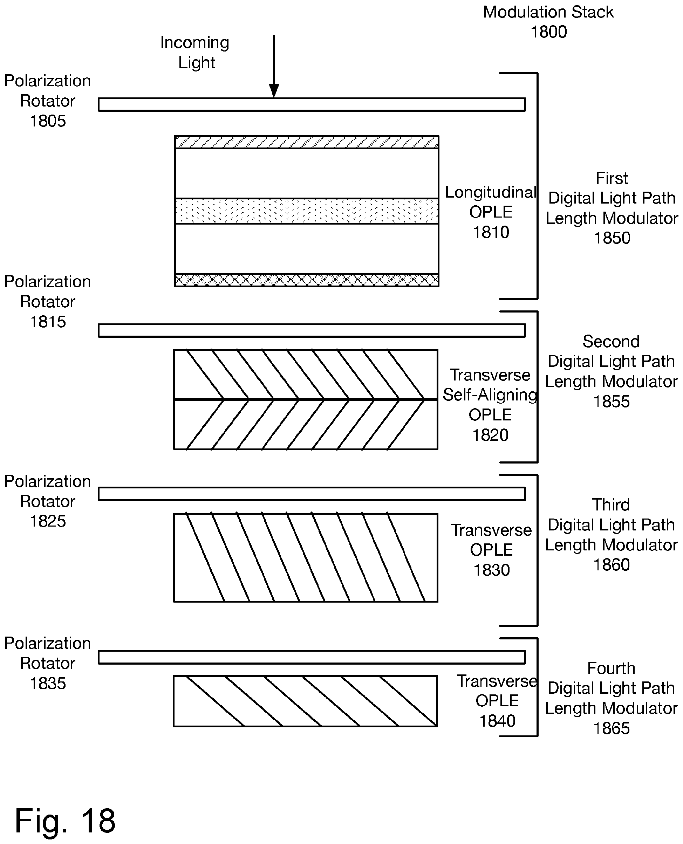

Figure 18 is one embodiment of a modulation stack including a plurality of OPLEs. The modulation stack includes four digital light path length modulators. Each of the digital light path length modulators 1850, 1855, 1860, 1865 includes a polarization modulator and an OPLE. In this example, the first OPLE 1810 is a longitudinal OPLE, while the other OPLEs are transverse OPLEs. One of the transverse OPLEs 1820 is a self-aligned OPLE.

In various embodiments, one or more of the following variations may be made: the effective thickness of the OPLEs may vary, as may the angles of the polarization sensitive reflective elements, and the OPLE may include one, two, or more plates. The effective thickness of the OPLE is defined as the cumulative thickness of the plates which are parts of the OPLE. Thus the effective thickness of OPLE 1820 is different than the thickness of OPLE 1840, even though the individual plates in the two OPLEs 1820, 1840 are identical.

With the shown set of four different OPLEs, the system can create up to sixteen, 2⁴ focal lengths by selectively modulating the polarization, as follows:

| **OPLE 1** | **OPLE 2** | **OPLE 3** | **OPLE 4** |
|---|---|---|---|
| State 1 | State 1 | State 1 | State 1 |
| State 1 | State 1 | State 1 | State 2 |
| State 1 | State 1 | State 2 | State 1 |
| State 1 | State 1 | State 2 | State 2 |
| State 1 | State 2 | State 1 | State 1 |
| State 1 | State 2 | State 1 | State 2 |
| State 1 | State 2 | State 2 | State 1 |
| State 1 | State 2 | State 2 | State 2 |
| State 2 | State 1 | State 1 | State 1 |
| State 2 | State 1 | State 1 | State 2 |
| State 2 | State 1 | State 2 | State 1 |
| State 2 | State 1 | State 2 | State 2 |
| State 2 | State 2 | State 1 | State 1 |
| State 2 | State 2 | State 1 | State 2 |
| State 2 | State 2 | State 2 | State 1 |
| State 2 | State 2 | State 2 | State 2 |

In one embodiment, because the light exits from both sides of a longitudinal OPLE, the longitudinal OPLE 1810 is preferentially a first OPLE in a modulation stack 1800 that includes longitudinal OPLEs. In one embodiment, the number of longitudinal OPLEs 1810 is limited by the level of light loss for each longitudinal OPLE.

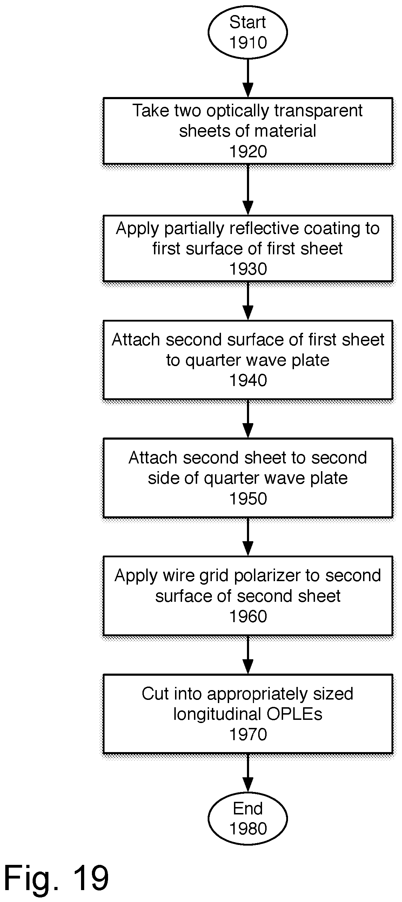

Figure 19 is a flowchart of one embodiment of manufacturing a longitudinal OPLE. The process starts at block 1910.

At block 1920, two optically transparent sheets of material are used. In one embodiment, the sheet is made of glass. Alternatively, another material that is optically clear to the wavelengths of the system, such as plastic, transparent ceramic, silicon, sapphire, or other materials, may be used.

At block 1930, a partially reflective coating is applied to the first surface of the first sheet. In one embodiment, this first surface is the "top" surface of the sheet, which will form the entry surface of the OPLE.

At block 1940, the second surface of the first sheet is attached to the quarter wave plate. In one embodiment the adhesive used is optically clear glue. In one embodiment, the substrates may be attached via spacers, in which the substrates are spaced apart using a support structure, rather than adhered or otherwise directly attached. Other methods of securing substrates together may be used. The quarter wave plate is made of a birefringent material, for which the index of refraction is different for different orientations of light passing through it. The quarter wave plate may be a bulk material, such as mica, quartz, calcite, or plastic. The quarter wave plate may be a film applied to an optically clear material. The quarter wave plate converts circularly polarized light into linear polarized light, and vice versa.

At block 1950, the second sheet is attached to the other side of the quarter wave plate. The quarter wave plate is now sandwiched between the two transparent sheets of material. The attachment may be via adhesive, spacers, or other methods.

At block 1960, the wire grid polarizer is applied to the second surface of the second sheet. This is the exit surface, in one embodiment.

At block 1970, the resulting material is cut into appropriately sized longitudinal OPLEs. The process then ends.

Although this is illustrated as a flowchart, one of skill in the art would understand that the steps need not be taken in the order shown. For example, the wire grid polarizer may be applied to the optically transparent material at any time, before or after the second sheet is integrated into the OPLE structure. Similarly, the partially reflective coating may be applied at any time.

The process shown produces consistent longitudinal OPLEs. These longitudinal OPLEs can be used to lengthen the light path, which may be controlled by digitally modulating the polarization of the light impacting the OPLE. The OPLE and the digital light path length modulator is easily and consistently manufactured, and takes up very little space.

In one embodiment, an OPLE is made up of one or more polarization sensitive reflective elements, which cause light of one polarization state to travel a longer path than light of the other polarization state. In one embodiment, the OPLE comprises a cuboid with one or two diagonal polarization sensitive reflective elements, and quarter wave plate and a mirror on both sides. Light of a second polarization state is reflected by the polarization sensitive reflective element, passes through the quarter wave plate, is reflected by the mirror and passes through the quarter wave plate for the second time. This reverses the polarization of the light, which is reflected at least once more prior to exiting the orthogonal OPLE. In one embodiment, the structure supporting the polarization sensitive reflective elements are four triangular prisms arranged in a cuboid, which support two differently oriented angled polarization sensitive reflective elements and with a light path extender on one side. In one embodiment, the angled polarization sensitive reflective element comprises a wire grid polarizer or a thin-film polarizer coating. In one embodiment, the OPLE may be made up of one or more plates with a plurality of polarization sensitive reflective elements. A plurality of digital light path length modulators create a modulation stack.

In one embodiment, by using a modulation stack, the number of focal planes can be increased. This provides the capacity to build a system that can meet the physiological requirements of human vision, by creating a display in which the 3D cues of overlap, focus, and vergence match. This produces a better quality 3D display and can prevent the headaches associated with 3D displays.

This mechanism in one embodiment can also be used for image capture, and various other uses in which light waves or other waves in a similar spectrum are either projected or captured, including but not limited to cameras, binoculars, 3D printing, lithography, medical imaging, etc. Creating a simple, easy to manufacture digital light path length modulator is like the step from vacuum tubes to transistors; it enables more complex, cheaper, and much more dense digitally controlled elements, which can become building blocks for a wide range of uses.

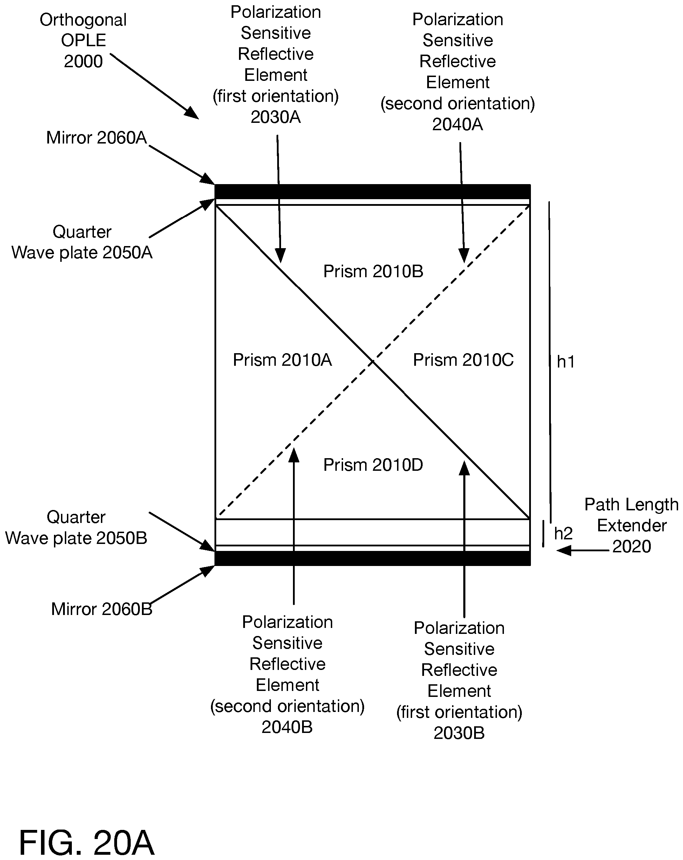

Figure 20A is diagram of one embodiment of an orthogonal optical light path length extender (OPLE) not according to the claimed invention. The orthogonal OPLE 2000 includes four prisms 2010A, 2010B, 2010C, and 2010D, arranged to form a cuboid. In one embodiment, the cuboid is a square cuboid. The prisms 2010A, 2010B, 2010C, 2010D define an entry surface (base of prism 2010A), an exit surface (base of prism 2010C), and two sides (bases of prisms 2010B and 2010D). In one embodiment, the height (h1) of the face defined by prisms 2010A, 2010B, 2010C, and 2010D is between 5mm and 2000mm. In one embodiment, the height is based on an aperture of the system.

Between the contact areas of the prisms 2010A, 2010B, 2010C, 2010D are angled polarization sensitive reflective elements (in one embodiment wire grid polarizers) 2030A, 2030B, 2040A, 2040B. The first diagonal formed by the prisms, formed by the shared edges prisms 2010A and 2010B and the shared edges of prisms 2010C and 2010D, has a wire grid polarizer in a first orientation 2030A, 2030B, and the perpendicular diagonal, formed by the shared edges of prisms 2010B and 2010C and the shared edges of prisms 2010A and 2010D, has a wire grid polarizer in a second orientation 2040A, 2040B.

A path length extender 2020 is positioned at one side of the OPLE 2000, here on the base of prism 2010D. In one embodiment, the height of the path length extender 2020 (h2) is between 20/4 mm to 30mm.

On both sides of the OPLE 2000 there is a quarter wave plate 2050A, 2050B and mirror 2060A, 2060B. In one embodiment, the quarter wave plate 2050A, 2050B is a birefringent material such as mica. In one embodiment, the quarter wave plate 2050A, 2050B is a polycarbonate film, which may be applied to the base of the side prism 2010B and the base of the path length extender 2020. In another embodiment, the quarter wave plate 2050B may be applied to the top of the path length extender 2020 or the bottom of prism 2010D.

In one embodiment, the prisms 2010A, 2010B, 2010C, 2010D and path length extender 2020 are made of material transparent to the wavelengths being used, e.g. optically transparent for light in optical wavelengths. The prisms 2010A, 2010B, 2010C, 2010D and path length extender 2020 are glued together, in one embodiment.

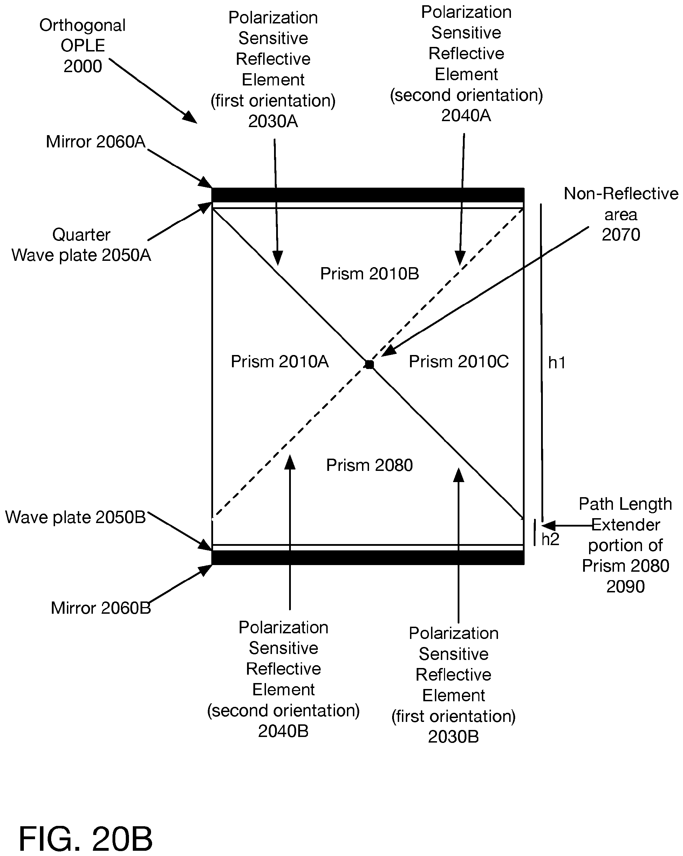

Figure 20B illustrates an alternative embodiment in which the prism on one side is a pentagonal prism 2080. In this embodiment, the path length extender 2090 may be manufactured as part of one of the prisms, here prism 2080. Prism 2080 replaces prism 2010D and path length extender 2020 shown in Figure 20A.

Additionally, in one embodiment there is a small non-reflective area 2070 on the tip of the prisms forming the intersection of the prisms 2010A, 2010B, 2010C, 2080. In one embodiment, the non-reflective area 2070 may be a black spot in the cross section. The non-reflective area 2070 ensures that light hitting the intersection point does not cause scattering of the light.

The embodiments of Figures 20A and 20B are not designed to be exclusive, and the elements may be mixed and matched.

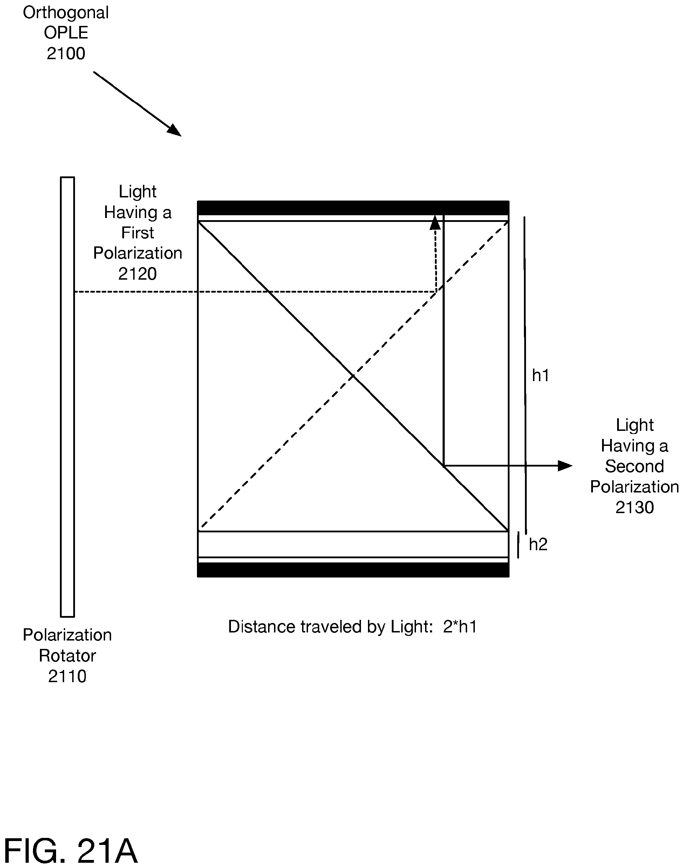

Figures 21A-21C illustrate the light paths followed by light in the orthogonal OPLE of Figure 1A. To enable seeing the light paths, the light bounced from the mirror is offset slightly. One of skill in the art would understand that this offset is for illustration purposes only. Figure 21A illustrates the light path for light having a first polarization 2120. The light with the first polarization exits polarization rotator 2110, and enters orthogonal OPLE 2100. It passes through the wire grid with the first orientation, and is reflected by the wire grid with the second polarization. It passes through quarter wave plate, then is reflected by the mirror. Due to passing through the quarter wave plate twice, the light now has the second polarization. Therefore, it passes through the wire grid with the second orientation, and is reflected out of the orthogonal OPLE 2100 by the wire grid with the first orientation. The length of the light path through the OPLE 2100 is 21*h1, twice the length of the sides of the square formed by the prisms. Note that although it is illustrated as having a thickness, the quarter wave plate does not add significantly to the light path length.

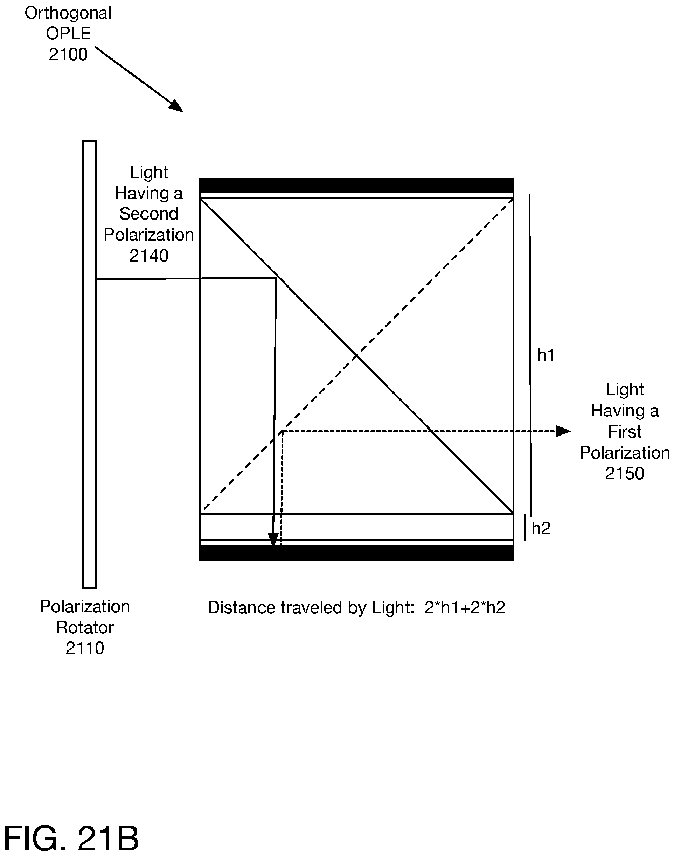

Figure 21B illustrates the light path for light having a second polarization 2140. The light with the second polarization exits polarization rotator 2110, and enters orthogonal OPLE 2100. It is reflected by the wire grid with the first orientation, and passes through the light path extender. It passes through the quarter wave plate, and is reflected by the mirror back through the quarter wave plate and the path length extender. Due to passing through the quarter wave plate twice, the light now has the first polarization. Therefore, it is reflected out of the orthogonal OPLE 2100 by the wire grid with the second orientation. The length of the light path through the OPLE 2100 is 21*h1 + 21*h2, twice the length of the sides of the square formed by the prisms plus twice the length of the path length extender. In a typical configuration of a 10mm×10mm prism, and a 21mm light path extender, the difference in the light paths therefore is 210%, 210mm to 214mm. In one embodiment, a polarization modulator is placed before the OPLE, so that light of one polarization is sent through the OPLE 2100, resulting in all of the light exiting at the same time, having traveled the same path length. In another embodiment, the light sent through the OPLE may include light of both polarizations, and the polarization selection may occur after the light goes through the OPLE 2100.

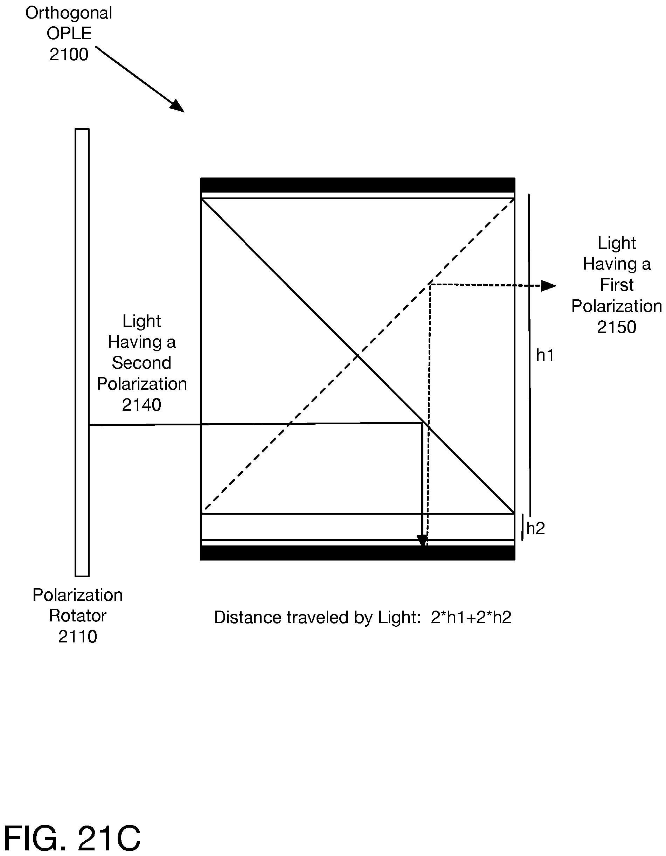

Figure 21C illustrates the light path for light having the second polarization entering the OPLE 2100 at a different location. As can be seen, in this instance the light passes through the wire grid with the first orientation, before being reflected by the wire grid with the second orientation through the light path extender. Thus, the distance traveled by the light is again 21*h1 + 21*h2.

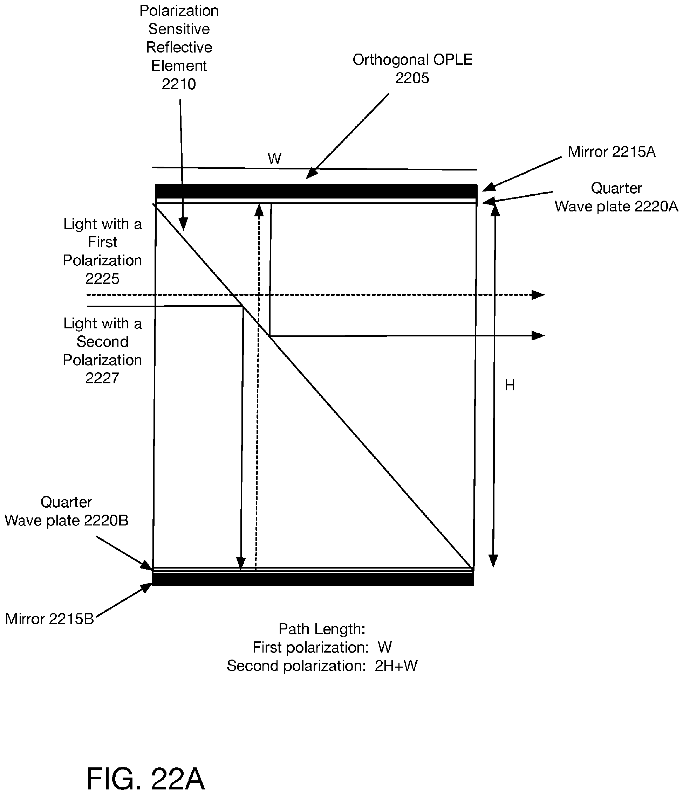

Figure 22A illustrates an alternative embodiment of the orthogonal OPLE. In this embodiment, there is only a single polarization sensitive reflective element (in one embodiment a wire grid polarizer) 2210, framed by the two quarter wave plates 2220A, 2220B and mirrors 2215A, 2215B. In one embodiment, this configuration may be built with two triangular prisms. In another embodiment, this configuration may be built with a single triangular prism.

In one embodiment, this configuration does not utilize a light path extender, in one embodiment, because there is a single polarization sensitive reflective element only the light with the second polarization is reflected. Light with the first polarization 2225 passes straight through the OPLE 2205. Light with the second polarization 2227 is reflected by the polarization sensitive reflective element 2210, passes through the quarter wave plate 2220B, is reflected by the mirror, and passes through the quarter wave plate 2220B again. It now has the first polarization and thus passes through the polarization sensitive reflective element 2210 before encountering the second quarter wave plate 2220A, and being bounced back once more, with the polarization rotated back to the second polarization. It then impacts the polarization sensitive reflective element 2210 for the third and last time, and is reflected out of the OPLE 2205. Thus, for a square cross-section of orthogonal OPLE 2205, the path length for the light with the first polarization is W, the width of the polarizer 2205, while the path length for the light with the second polarization is 2H + W (or 22H), since it bounces twice between the sides of the OPLE 2205.

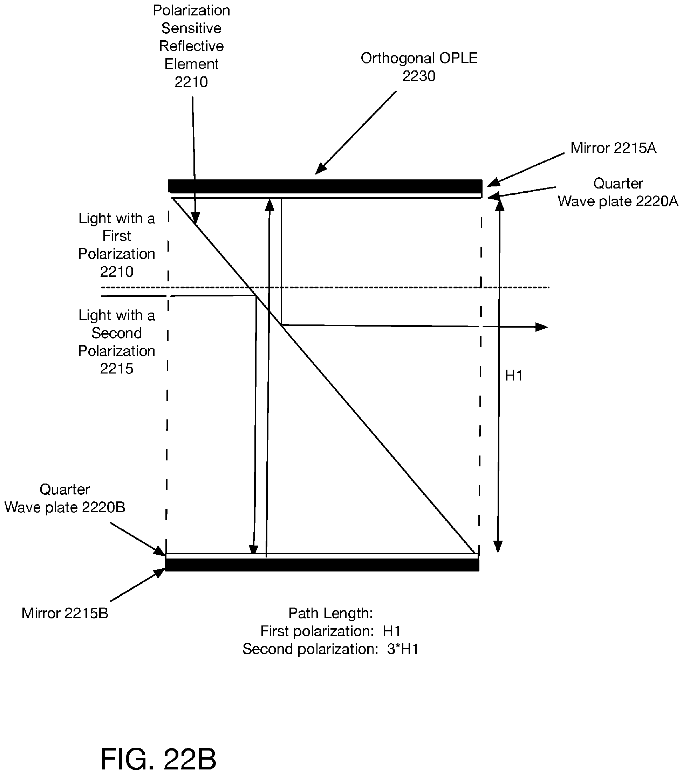

Figure 22B illustrates an alternative embodiment of the OPLE with a single polarization sensitive reflective element not according to the claimed invention. In this configuration, the OPLE 2230 includes the same elements of polarization sensitive reflective element 2210, two quarter wave plates 2220A, 2220B, and two mirrors 2215A, 2215B. However, instead of utilizing prisms to position the polarization sensitive reflective element 2210, the polarization sensitive reflective element 2210is supported by a different support structure. In one embodiment, the support structure may be a thin sheet of glass, plastic, film, or other material that can provide support for a polarization sensitive reflective element such as a wire grid polarizer or a thin film polarizer coating and can maintain its structure. In one embodiment, the prisms may be replaced by air, and the polarization sensitive reflective element 2210 may be supported on one or more edges of the support structure by being attached to a frame or other structure. In another embodiment, the polarization sensitive reflective element may be supported by a support structure such as a diagonal piece of glass, plastic, or other optically transparent material. This configuration may be useful if weight is a concern.

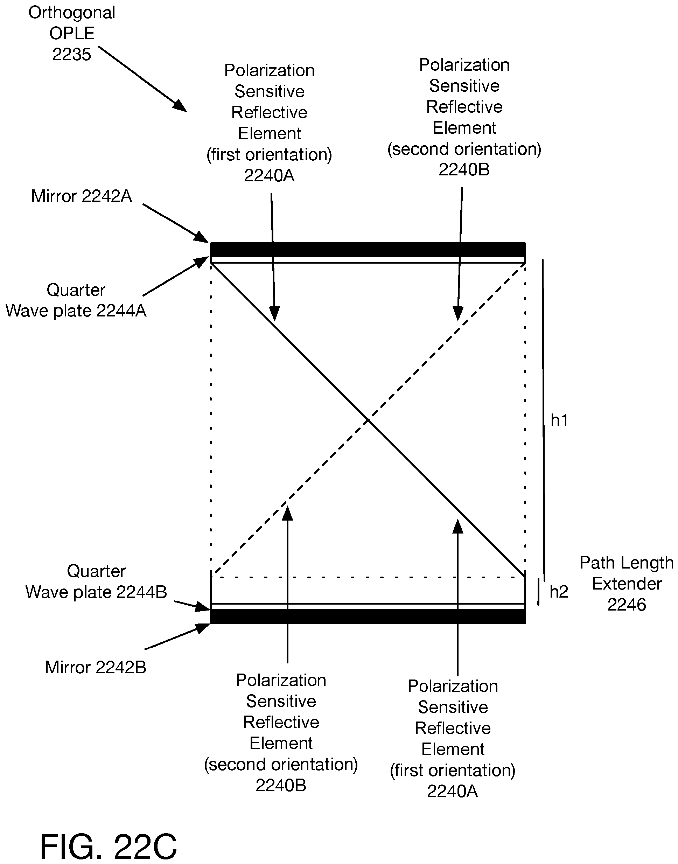

Figure 22C illustrates an embodiment of the OPLE 2235 shown in Figures 1A and 1B not according to the claimed invention, without the prism supporting structure. This configuration includes a support framework for the polarization sensitive reflective elements 2240A, 2240B, but does not include the prisms shown in Figure 1A. In one embodiment, the polarization sensitive reflective elements 2240A, 2240B are fastened to the top of the path length extender portion 2246 of the OPLE 2235. In one embodiment, the path length extender may be formed by a framework which provides a spacing between the bottom of the polarization sensitive reflective elements 2240A, 2240B and the quarter wave plate 2244B.

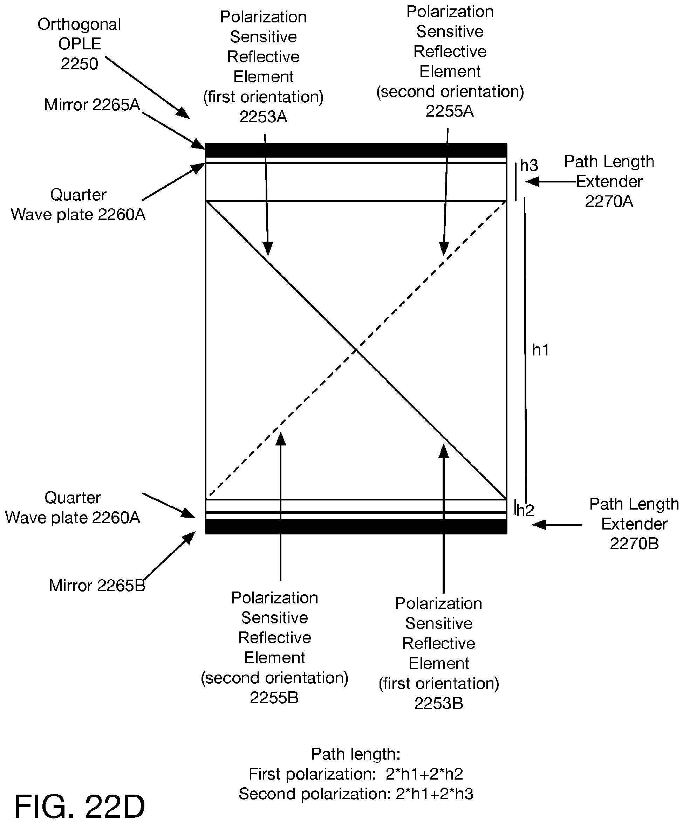

Figure 22D illustrates an alternative embodiment of an OPLE not according to the claimed invention. In this configuration, both sides of the OPLE 2250 have a path length extender 2270A, 2270B. In this configuration, the difference in path length is the difference in the height of the path length extender 2270A, 2270B. In one embodiment, the system may provide an adjustable height, enabling changes in the light path length. In one embodiment, the height may be adjusted by moving the mirror relative to the rest of the OPLE to create a longer or shorter path length extender on either or both sides of the OPLE.

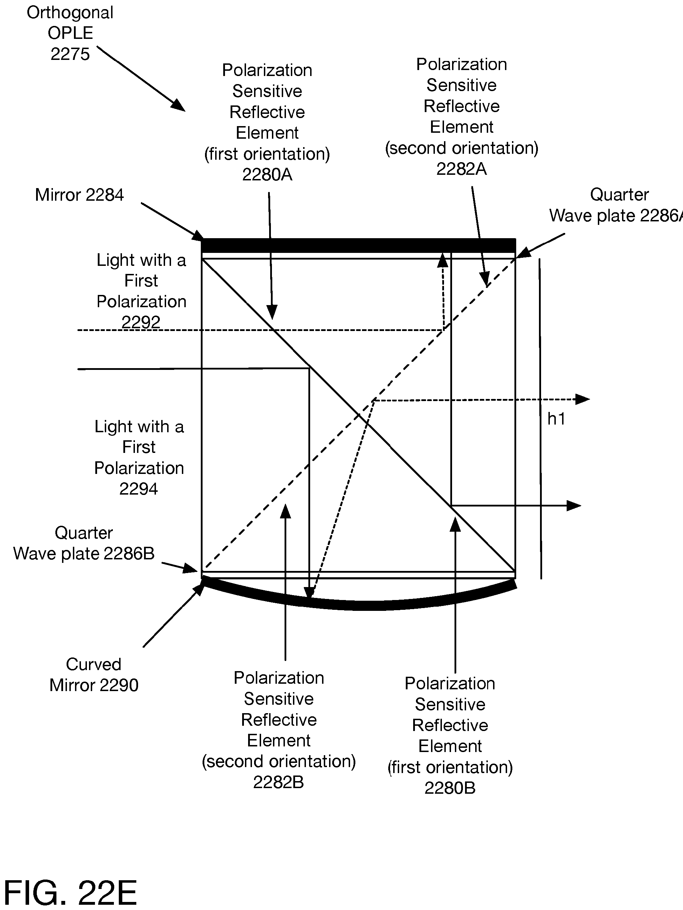

Figure 22E illustrates another embodiment of an OPLE not according to the claimed invention. In this configuration, the light path length extension on one or both sides is provided by a curved mirror 2290. In one embodiment, no light path length extender is needed. In another embodiment, an optional light path extender is used. By using mirrors which have an optical power the virtual object distance is modulated. This may be combined with a light path extender (not shown).

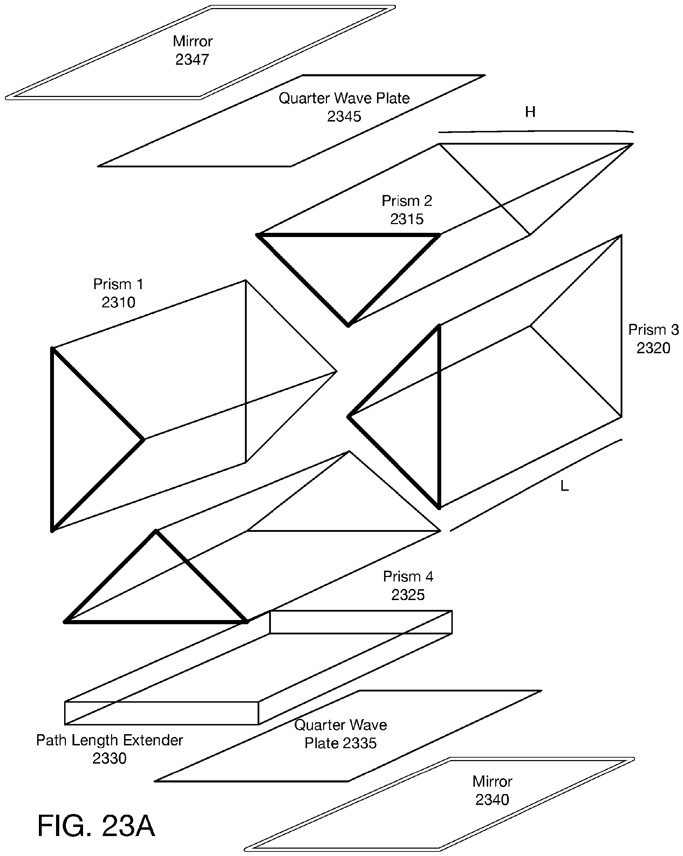

Figure 23A is a diagram of one embodiment of assembling the pieces of an orthogonal OPLE. The triangular prisms 2310, 2315, 2320, 2325 are matched in size. In one embodiment, each prism 2310, 2315, 2320, 2325 has isosceles triangle ends. The triangles in one embodiment are 90-45-45 triangles. In one embodiment, the prisms are made of glass or plastic that is transparent to the wavelengths used by the system. For visual object representation or capture, the prism is transparent to light in the visual frequency range.

The wire grid or other polarization sensitive reflective element (not shown) is placed on the prisms. In one embodiment, wire grids may be placed on the prisms, glued onto the prisms, or nano-imprinted on the prisms. In one embodiment, one side of each prism 2310, 2315, 2320, 2325 has a wire grid placed on it, such that there are two prisms with polarization sensitive reflective elements of each orientation. In another embodiment, two prisms may have polarization sensitive reflective elements of opposite orientations placed on the two sides of the prism.

Once the polarization sensitive reflective elements are applied, the prisms 2310, 2315, 2320, 2325 may be attached to each other. In one embodiment, the prisms are glued together with index matched glue, which does not have an optical effect.

The path length extender 2330 is then attached to a base of a prism, here prism 2325 In one embodiment, the path length extender 2330 is also made of glass or plastic transparent to the wavelengths used by the system, and it is glued using index matched glue. In another embodiment, as shown above in Figure 1B, one of the prisms may include an integral light path extender. In that configuration, the light path extender does not need to be attached to the prism.

The quarter wave plates 2335, 2345 are then coupled to the sides of the cuboid formed by the prisms 2310, 2315, 2320, 2325 and the light path extender 2330. In one embodiment, the quarter wave plates 2335, 2345 may be a film applied to the base of the prism 2315 and path length extender 2330. Mirrors 2340, 2347 are coupled to the quarter wave plates 2335, 2345. In one embodiment, the mirrors are glued on, using index matched glue.

Although the prisms 2310, 2315, 2320, 2325 here are shown as relatively short pieces, in one embodiment the system may be assembled as a large rectangle, and then cut to an appropriate size. The size, in one embodiment, depends on the aperture of the system. In one exemplary embodiment, the face formed by the prisms is 5mmx5mm (H), and the length of the OPLE (L) is 12mm. The length may be between 5mm and 100mm.

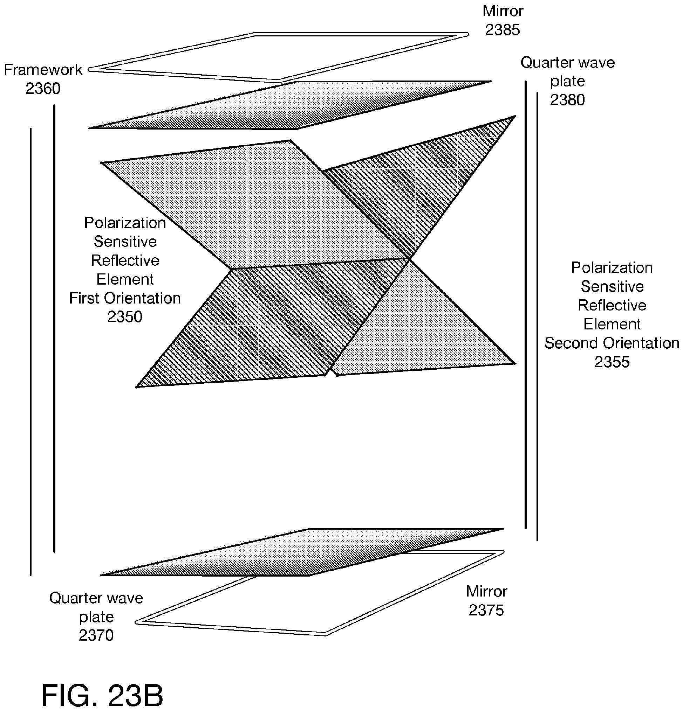

Figure 23B illustrates one embodiment of the assembly of an OPLE without the prisms not according to the claimed invention. In one embodiment, polarization sensitive reflective elements of the first orientation 2350 and second orientation 2355 are intersected. The polarization sensitive reflective elements 2350, 2355 are placed on a support structure, in one embodiment. The support structure may be plastic, glass, film, or another optically clear material which can provide structure for the polarization sensitive reflective elements s 2350, 2355. In one embodiment, the polarization sensitive reflective elements 2350, 2355 and their support structure have half slits, so the two polarization sensitive reflective elements 2350, 2355 slide into each other forming an X shape. In one embodiment, the polarization sensitive reflective elements 2350, 2355 are perpendicular to each other, and the wire grid polarizer with the first orientation is at a -45 degree angle from the entrance surface of the OPLE.

In one embodiment, in this configuration the center of the OPLE has a non-reflective area to ensure that no negative optical effects are introduced into the system. In one embodiment, the OPLE includes the polarization sensitive reflective elements 2350, 2355, quarter wave plates 2370, 2380, and mirrors 2380, 2385.

The structure is supported by a framework 2360, illustrated for simplicity by framing elements. The framework in one embodiment may be plastic, glass, or another material, and need not be transparent as long as it is capable of supporting the mirror and polarization sensitive reflective elements. In one embodiment, the quarter wave plates 2370, 2380 may be attached to the mirror 2375, 2385. In one embodiment, there may be a path length extender (not shown). In another embodiment, the bottom of polarization sensitive reflective elements 2350, 2355 is positioned a height h2 above the quarter wave plate 2370 and mirror 2375 to create the spacing of the path length extender without requiring a physical object.

From Figure 23A and 23B it should be clear how to assemble the various OPLE configurations shown in Figures 1A, 1B, 2A, 2B, 2C, 2D, and 2E. Although these embodiments are separately shown, one of skill in the art would understand that elements from the configurations may be utilized in other configurations as well.

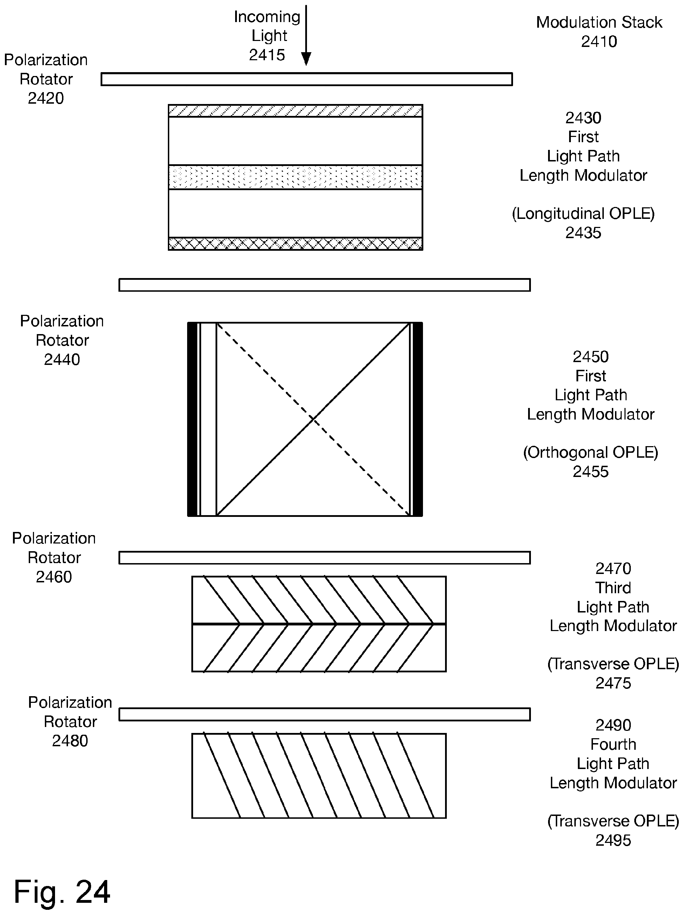

Figure 24 is a diagram of one embodiment of a modulation stack including a plurality of OPLEs. This exemplary modulation stack includes four digital light path length modulators, each of the modulators 2430, 2450, 2470, and 2490 includes a polarization modulator and an OPLE. In this example, the first OPLE 2435 is a longitudinal OPLE 2435, the second OPLE is an orthogonal OPLE 2455, the third and fourth OPLEs are transverse OPLEs 2475, 2495. With the shown set of four different OPLEs, the system can create up to sixteen focal lengths by selectively modulating the polarization.

In one embodiment, because the light exits from both sides of a longitudinal OPLE, the longitudinal OPLE 2435 is preferentially a first OPLE in a modulation stack 2410 that includes longitudinal OPLEs.

In the foregoing specification, the invention has been described with reference to specific exemplary embodiments thereof. It will, however, be evident that various modifications and changes may be made thereto without departing from the scope of the invention as set forth in the appended claims. The specification and drawings are, accordingly, to be regarded in an illustrative rather than a restrictive sense.

## Claims

1. A system comprising:
an optical path length extender [OPLE] (130,325,440,610,650,670,680,810,830,850,870,
1020,1040,1060,1820,1830,1840,2470,2490) including a plurality of polarization sensitive reflective elements (520, 640), wherein all of the plurality of polarization reflective elements are parallel and at an angle between 20 and 70 degrees to an entrance surface of the OPLE, the OPLE comprising two light paths having different path lengths, such that light having a first polarization is directed through a first light path, and the light having a second polarization is directed through a second light path, such that a portion of an image is at a first focal length defined by the first light path, and a second portion of the image is at a second focal length defined by the second light path; and
an imager to capture or display the image.

2. The system of claim 1, wherein all of the polarized light incident on the OPLE has a first polarization, and a polarization of the light is adapted to be modulated over time.

3. The system of claim 1, wherein the OPLE is adapted to be manufactured using a plurality of base substrates with polarization sensitive reflective elements applied to each of the base substrates, the plurality of base substrates are coupled together, and cut at a saw angle to produce an OPLE with a plurality of parallel polarization sensitive reflective elements at an angle of between 20 degrees and 70 degrees to the entrance surface of a path of the light entering the OPLE, corresponding to the saw angle.

4. The system of claim 1, wherein the polarization sensitive reflective elements are selected from among a dielectric layer and a wire grid.

5. The system of claim 1, wherein:
the OPLE comprises two plates forming a self-aligned OPLE (240).

6. The system of claim 5, wherein light exiting the self-aligned OPLE is not spatially shifted from a path of the light entering the self-aligned OPLE.

7. The system of claim 5, wherein angles of the polarization sensitive reflective elements in the two plates in the self-aligned OPLE are mirrored.

8. The system of claim 1, further comprising:
a polarization modulator (820) to modulate a polarization of some or all of the polarized light exiting from the first OPLE;
a second OPLE receiving light output by the polarization modulator, the second OPLE to further alter light path lengths; and
the polarization modulator and the second OPLE comprising a digital light path length modulator.

9. The system of claim 1, further comprising:
a polarizer (220,270) to generate the polarized light;
a polarization modulator (320) to modulate a polarization of some or all of the polarized light before entering the OPLE; and
the polarization modulator and the OPLE comprising a digital light path length modulator.

10. The system of claim 9, further comprising:
a plurality of digital light path length modulators forming a modulation stack (1800), the modulation stack used to generate a plurality of digitally selectable light path lengths.

11. The system of claim 1, further comprising:
a digital correction system (210) to adjust the light from a light source to correct spatial shift between the light exiting the first light path, and the light exiting the second light path.

## Patentansprüche

1. System, umfassend:
einen optischen Pfadlängenextender [OPLE] (130,325,440,610,650,670,680,810,830,850,870,1020,1040,1060,1820,1830,1840,2470,2490) einschließlich einer Vielzahl von polarisationsempfindlichen reflektierenden Elementen (520, 640), wobei alle der Vielzahl von polarisationsreflektierenden Elementen parallel und in einem Winkel zwischen 20 und 70 Grad zu einer Eintrittsfläche des OPLE sind, wobei der OPLE zwei Lichtpfade mit unterschiedlichen Pfadlängen umfasst, sodass eine erste Polarisation aufweisendes Licht durch einen ersten Lichtpfad geleitet wird und das eine zweite Polarisation aufweisende Licht durch einen zweiten Lichtpfad geleitet wird, sodass ein Teil eines Bildes eine erste Brennweite aufweist, die von dem ersten Lichtpfad definiert ist, und ein zweiter Teil des Bildes eine zweite Brennweite aufweist, die von dem zweiten Lichtpfad definiert ist, und
einen Bildgeber zum Erfassen oder Anzeigen des Bildes.

2. System nach Anspruch 1, wobei das gesamte auf den OPLE auftreffende polarisierte Licht eine erste Polarisation aufweist und eine Polarisation des Lichts dazu ausgelegt ist, im Laufe der Zeit moduliert zu werden.

3. System nach Anspruch 1, wobei der OPLE dazu ausgelegt ist, unter Verwendung einer Vielzahl von Basissubstraten hergestellt zu werden, wobei polarisationsempfindliche reflektierende Elemente auf jedes der Basissubstrate aufgebracht sind, die Vielzahl von Basissubstraten miteinander gekoppelt und in einem Sägewinkel geschnitten sind, um einen OPLE mit einer Vielzahl von parallelen polarisationsempfindlichen reflektierenden Elementen in einem Winkel von zwischen 20 Grad und 70 Grad zu der Eintrittsfläche eines Pfads des in den OPLE eintretenden Lichts entsprechend dem Sägewinkel zu erzeugen.

4. System nach Anspruch 1, wobei die polarisationsempfindlichen reflektierenden Elemente aus einer dielektrischen Schicht und einem Drahtgitter ausgewählt sind.

5. System nach Anspruch 1, wobei:
der OPLE zwei Platten umfasst, die einen selbstausgerichteten OPLE (240) bilden.

6. System nach Anspruch 5, wobei aus dem selbstausgerichteten OPLE austretendes Licht nicht räumlich weg von einem Pfad des in den selbstausgerichteten OPLE eintretenden Lichts verschoben wird.

7. System nach Anspruch 5, wobei Winkel der polarisationsempfindlichen reflektierenden Elemente in den beiden Platten, in dem selbstausgerichteten OPLE, gespiegelt sind.

8. System nach Anspruch 1, ferner umfassend:
einen Polarisationsmodulator (820) zum Modulieren einer Polarisation eines Teils des oder des gesamten polarisierten Lichts, das aus dem ersten OPLE austritt;
einen zweiten OPLE, der von dem Polarisationsmodulator ausgegebenes Licht empfängt, wobei der zweite OPLE zum weiteren Verändern von Lichtpfadlängen dient; und
den Polarisationsmodulator und den zweiten OPLE umfassend einen digitalen Lichtpfadlängenmodulator.

9. System nach Anspruch 1, ferner umfassend:
einen Polarisator (220,270) zum Erzeugen des polarisierten Lichts,
einen Polarisationsmodulator (320) zum Modulieren einer Polarisation eines Teils des oder des gesamten polarisierten Lichts vor dem Eintreten in den OPLE, und
den Polarisationsmodulator und den OPLE umfassend einen digitalen Lichtpfadlängenmodulator.

10. System nach Anspruch 9, ferner umfassend:
eine Vielzahl von digitalen Lichtpfadlängenmodulatoren, die einen Modulationsstapel (1800) bilden, wobei der Modulationsstapel verwendet wird, um eine Vielzahl von digital selektierbaren Lichtpfadlängen zu erzeugen.

11. System nach Anspruch 1, ferner umfassend:
ein digitales Korrektursystem (210) zum Anpassen des Lichts aus einer Lichtquelle, um die räumliche Verschiebung zwischen dem aus dem ersten Lichtpfad austretenden Licht und dem aus dem zweiten Lichtpfad austretenden Licht zu korrigieren.

## Revendications

1. Système comprenant :
un prolongateur de longueur de chemin optique [OPLE] (130, 325, 440, 610, 650, 670, 680, 810, 830, 850, 870, 1020, 1040, 1060, 1820, 1830, 1840, 2470, 2490) comprenant une pluralité d'éléments réfléchissants sensibles à la polarisation (520, 640), dans lequel la totalité de la pluralité d'éléments réfléchissants de polarisation sont parallèles et forment un angle compris entre 20 et 70 degrés par rapport à une surface d'entrée de l'OPLE, l'OPLE comprenant deux chemins lumineux comportant des longueurs de chemin différentes, de sorte que la lumière comportant une première polarisation est dirigée à travers un premier chemin lumineux, et la lumière comportant une seconde polarisation est dirigée à travers un second chemin lumineux, de sorte qu'une partie d'une image se trouve à une première longueur focale définie par le premier chemin lumineux, et une seconde partie de l'image se trouve à une seconde longueur focale définie par le second chemin lumineux ; et
un imageur pour capturer ou afficher l'image.

2. Système de la revendication 1, dans lequel toute la lumière polarisée incidente sur l'OPLE comporte une première polarisation, et une polarisation de la lumière est adaptée pour être modulée dans le temps.

3. Système de la revendication 1, dans lequel l'OPLE est conçu pour être fabriqué à l'aide d'une pluralité de substrats de base avec des éléments réfléchissants sensibles à la polarisation appliqués à chacun des substrats de base, la pluralité de substrats de base sont couplés ensemble et coupés à un angle de scie pour produire un OPLE avec une pluralité d'éléments réfléchissants sensibles à la polarisation parallèles formant un angle compris entre 20 degrés et 70 degrés par rapport à la surface d'entrée d'un chemin de la lumière entrant dans l'OPLE, correspondant à l'angle de scie.

4. Système de la revendication 1, dans lequel les éléments réfléchissants sensibles à la polarisation sont choisis parmi une couche diélectrique et une grille métallique.

5. Système de la revendication 1, dans lequel :
l'OPLE comprend deux plaques formant un OPLE auto-aligné (240).

6. Système de la revendication 5, dans lequel la lumière sortant de l'OPLE auto-aligné n'est pas décalée spatialement par rapport à un chemin de la lumière entrant dans l'OPLE auto-aligné.

7. Système de la revendication 5, dans lequel les angles des éléments réfléchissants sensibles à la polarisation dans les deux plaques de l'OPLE auto-aligné sont en miroir.

8. Système de la revendication 1, comprenant en outre :
un modulateur de polarisation (820) pour moduler une polarisation d'une partie ou de la totalité de la lumière polarisée sortant du premier OPLE ; et
un second OPLE recevant la lumière émise en sortie par le modulateur de polarisation, le second OPLE permettant de modifier davantage les longueurs de chemin lumineux ; et
le modulateur de polarisation et le second OPLE comprenant un modulateur de longueur de chemin lumineux numérique.

9. Système de la revendication 1, comprenant en outre :
un polariseur (220, 270) pour générer la lumière polarisée ;
un modulateur de polarisation (320) pour moduler une polarisation d'une partie ou de la totalité de la lumière polarisée avant d'entrer dans l'OPLE ; et
le modulateur de polarisation et l'OPLE comprenant un modulateur de longueur de chemin lumineux numérique.

10. Système de la revendication 9, comprenant en outre :
une pluralité de modulateurs de longueur de chemin lumineux numériques formant un empilement de modulation (1800), l'empilement de modulation étant utilisé pour générer une pluralité de longueurs de chemin lumineux sélectionnables numériquement.

11. Système de la revendication 1, comprenant en outre :
un système de correction numérique (210) pour ajuster la lumière provenant d'une source lumineuse afin de corriger un décalage spatial entre la lumière sortant du premier chemin lumineux et la lumière sortant du second chemin lumineux.
